(19) Europäisches Patentamt / European Patent Office / Office européen des brevets

(11) **EP 2 440 946 B1**

(12) **FASCICULE DE BREVET EUROPEEN**

(45) Date de publication et mention de la délivrance du brevet:
**08.01.2014 Bulletin 2014/02**

(21) Numéro de dépôt: **10723692.9**

(22) Date de dépôt: **16.04.2010**

(51) Int Cl.:
*G01S 3/06* (2006.01)
*G01S 13/95* (2006.01)
*G01V 3/17* (2006.01)
*G01S 13/90* (2006.01)
*G01K 11/00* (2006.01)
*G01S 7/40* (2006.01)

(86) Numéro de dépôt international:
**PCT/FR2010/050739**

(87) Numéro de publication internationale:
**WO 2010/142876 (16.12.2010 Gazette 2010/50)**

(54) **PROCÉDÉ ET SYSTÈME D'IMAGERIE RADIOMÉTRIQUE À SYNTHÈSE D'OUVERTURE SPATIO-TEMPORELLE**

Verfahren und Vorrichtung für radiometrische Bildgebung mit synthetischer Apertur

METHOD AND SYSTEM FOR RADIOMETRIC IMAGING WITH SPATIO-TEMPORAL OPENING SYNTHESIS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.06.2009 FR 0953787**

(43) Date de publication de la demande:
**18.04.2012 Bulletin 2012/16**

(73) Titulaire: **Centre National d'Etudes Spatiales**
**75001 Paris (FR)**

(72) Inventeurs:
 • **CABOT, François**
 **F-31450 Odars (FR)**
 • **KERR, Yann**
 **F-31000 Toulouse (FR)**
 • **RICHAUME, Philippe**
 **F-31500 Toulouse (FR)**
 • **SOUYRIS, Jean-Claude**
 **F-31520 Ramonville Saint Agne (FR)**
 • **ROUGE, Bernard**
 **F-31400 Toulouse (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A1- 1 868 010    US-A- 4 724 439**

 • GOUTOULE J-M ET AL: "Large interferometer antennas synthesised by satelittes in formation for earth remote sensing" GEOSCIENCE AND REMOTE SENSING SYMPOSIUN, 2000. PROCEEDINGS. IGARSS 200 0. IEEE 2000 INTERNATIONAL 24-28 JULY 2000, PISCATAWAY, NJ, USA,IEEE, vol. 2, 24 juillet 2000 (2000-07-24), pages 869-870, XP010505891 ISBN: 978-0-7803-6359-5
 • MARTIN-NEIRA M ET AL: "MIRAS, a two-dimensional aperture synthesis radiometer" GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRET ATION., INTERNATIONAL PASADENA, CA, USA 8-12 AUG. 1994, NEW YORK, NY, USA,IEEE, US, vol. 3, 8 août 1994 (1994-08-08), pages 1323-1325, XP010138556 ISBN: 978-0-7803-1497-9
 • CAMPS A ET AL: "MIRAS End-to-End Calibration: Application to SMOS L1 Processor" IEEE TRANSACTIONS ON GEOSCIENCE AND REMOTE SENSING, IEEE SERVICE CENTER, PISCATAWAY, NJ, US, vol. 43, no. 5, 1 mai 2005 (2005-05-01), pages 1126-1134, XP011130902 ISSN: 0196-2892
 • MCMULLAN K D ET AL: "SMOS: The Payload" IEEE TRANSACTIONS ON GEOSCIENCE AND REMOTE SENSING, IEEE SERVICE CENTER, PISCATAWAY, NJ, US, vol. 46, no. 3, 1 mars 2008 (2008-03-01), pages 594-605, XP011203535 ISSN: 0196-2892

**Description**

L'invention se rapporte à un procédé d'imagerie à synthèse d'ouverture utilisant un radiomètre d'imagerie embarqué à bord d'au moins un satellite et le système d'imagerie correspondant de mise en oeuvre du procédé.

Des satellites d'observation de la Terre comme par exemple le satellite SMOS (dénomination anglaise de Soil Moisture and Ocean Salinity) ont été développés pour mesurer les températures de brillance sous forme de rayonnements électromagnétiques polarisés multi-angulaires du sol et des océans avec une grande possibilité de revisite, typiquement une période de trois jours, et poursuivre ainsi l'évolution de l'humidité des sols et la salinité des océans.

Le satellite SMOS parcourt une orbite héliosynchrone à l'altitude de 755 km et à la vitesse de 7 km/s suivant une période de 100 minutes.

Le radiomètre d'imagerie embarqué à bord du satellite SMOS fonctionne en bande L dans une bande de 17 MHz autour de la fréquence correspondant à une longueur d'onde de 21 cm.

Le radiomètre d'imagerie est constitué de 54 antennes élémentaires disposées par groupe de dix huit sur trois pales d'un rotor en forme de « Y ».

Les antennes élémentaires sont associées chacune à un récepteur distinct et sont reliées au travers des récepteurs et d'un harnais constitué de fibres optiques à un corrélateur de sortie codée sur un bit permettant de corréler les champs électriques reçus par chaque paire d'antennes élémentaires.

Les longueurs des fibres optiques formant le harnais sont quasi identiques et la précision de positionnement des antennes sur les pales est de 3 mm. Le satellite lorsqu'il est en service est incliné d'un angle de 31,2 degrés par rapport à la direction nadir.

La fauchée dénommée snap-shot en anglais étant d'environ 1000 km, le pixel de l'image construite par un procédé de synthèse d'ouverture spatial est égal à 40 km et le temps d'intégration pour calculer la corrélation pour une paire quelconque d'antennes élémentaires est égal à 1,2 secondes.

La taille du pixel est égale à la résolution géométrique de l'imageur et le temps d'intégration constitutif d'une fauchée.

Ainsi, une centaine de fauchées consécutives permettent l'acquisition du même pixel pour différents angles d'incidences compris entre 0 et 55 degrés.

En outre la sensibilité radiométrique appelée également résolution radiométrique est comprise entre 3,5 et 5,8° K.

Le temps d'échantillonnage de chaque mesure élémentaire de champ électrique reçu par une antenne élémentaire est égal à $10^{-6}$ secondes.

En raison de la structure à trois pales du radiomètre, la surface d'ouverture obtenue est, d'une part plus petite que celle du disque dans laquelle les pales sont circonscrites et d'autre part anisotrope.

L'augmentation du nombre de pales permet d'accroitre la surface d'ouverture et d'améliorer l'isotropie de son contour mais il en résulte une augmentation du nombre d'antennes élémentaires et par conséquent une augmentation de la masse du satellite.

Le problème technique est d'accroitre la surface d'ouverture synthétisée du radiomètre sans augmenter le nombre d'antennes élémentaires, la résolution géométrique et sans dégrader la résolution radiométrique.

A cet effet, l'invention a pour objet un procédé d'imagerie radiométrique destiné à cartographier au moins un paramètre caractéristique d'objets distants disposés sur une surface et détectable par le rayonnement électromagnétique multi-angulaire émis par les objets, le procédé utilisant une antenne réseau formée d'antennes élémentaires disposées à bord d'au moins un satellite mobile par rapport à la surface, le procédé étant caractérisé en ce qu'il comprend les étapes consistant à :

identifier chaque antenne élémentaire A(k) par un indice k,
horodater par une base de temps des positions successives P(t(i)) d'une antenne élémentaire A(1) prédéterminée de l'antenne réseau servant de référence spatio-temporelle, les positions successives de l'antenne élémentaire de référence A(1) étant échantillonnées suivant une période d'échantillonnage $\Delta t_{ech}$ à des instants successifs t(i) ordonnés suivant un indice i et étant repérées dans un repère spatial fixe par rapport à la surface survolée,
à chaque antenne élémentaire A(k) étant associée une horloge locale H(k), pour chaque position successive échantillonnée P(t(i)) de l'antenne élémentaire de référence A(1), synchroniser chaque horloge locale associée H(k) sur la base de temps,
pour chaque position successive échantillonnée P(t(i) de l'antenne élémentaire de référence A(1), déterminer les positions spatiales respectives des antennes élémentaires A(k) par rapport à l'antenne élémentaire de référence A(1),
à chaque instant d'échantillonnage t(i) correspondant à une position échantillonnée P(t(i)) de l'antenne élémentaire A(1), mesurer de manière analytique un champ électromagnétique reçu par chaque antenne élémentaire A(k) et fournir pour chacune une composante en phase et une composante en quadrature du champ,
affecter à chaque mesure analytique de champ électromagnétique (E(k,t)) mesuré l'indice k de l'antenne élémentaire correspondante et la date t(i) d'échantillonnage correspondante,

pour un indice d'image i_m prédéterminé, définir un domaine d'image temporel $D_{IM}(i_m)$ constitué les instants d'échantillonnage t(j) tels que la différence $t(i_m)-t(j)$ est inférieur ou égal à une durée temporelle de domaine d'image d'mage $\Delta t_{IM}$ prédéterminée,

à chaque couple (k, j) d'indice k d'antenne élémentaire A(k) et d'indice d'instant d'échantillonnage j correspondant au domaine d'image temporel $D_{IM}(i_m)$, fournir un vecteur de mesure M(k, j) contenant ordonnés temporellement les échantillons des mesures du champ électromagnétique reçu par l'antenne élémentaire A(k) aux instants d'échantillonnage compris entre l'instant d'échantillonnage t(j) et l'instant d'échantillonnage $t(j-\dfrac{\Delta t_c}{\Delta t_{ech}})$, $\Delta t_c$ désignant une durée d'intégration de la corrélation entre deux vecteurs de mesure M(k,j), M(k',j'),

construire une image $IM(i_m)$ à partir d'une fonction de visibilité spatiotemporelle comprenant un ensemble de coefficients de visibilités, au moins un coefficient de visibilité étant égal à la corrélation de deux vecteurs de mesure M(k,j), M(k', j') dont les indices d'échantillonnage j, j' sont distincts.

Suivant des modes particuliers de réalisation, le procédé d'imagerie radiométrique comporte l'une ou plusieurs des caractéristiques suivantes :

- une taille de pixel $T_{pixel}$ étant prédéterminée et l'au moins un satellite portant l'antenne de référence élémentaire A (1) présentant une vitesse de déplacement par rapport à la surface observée $V_{sat}$, la durée d'intégration de corrélation $\Delta t_c$ est égale au produit d'un coefficient fractionnaire $\alpha$ par la taille $T_{pixel}$ d'un pixel divisé par la vitesse $V_{sat}$ de l'au moins un satellite ;
- le coefficient fractionnaire $\alpha$ est inférieur ou égal à 1/3 et de préférence égal à 1/5 ;
- la durée temporelle de domaine d'image d'mage $\Delta t_{IM}$ est égale au rapport de la plus grande des distances D séparant un couple quelconque d'antennes élémentaires A(k) sur la vitesse de déplacement $V_{sat}$ de l'au moins un satellite, et
- une bande passante B de filtrage des fréquences autour d'une fréquence central $v_0$ du champ électromagnétique mesuré par chacune des antennes élémentaires A(k) est inférieure ou égale au rapport de la vitesse de déplacement $V_{sat}$ de l'au moins un satellite sur la plus grande des distances D séparant un couple quelconque d'antennes élémentaires A(k) ;
- une bande de fréquences de mesure du champ électromagnétique reçu par les antennes élémentaires A(k) est comprise dans la bande L et de préférence dans la bande des fréquences comprises entre 1400 et 1427 MHz ;
- la précision de localisation d'une antenne élémentaire A(k) est égale au produit d'un coefficient fractionnaire $\beta$ par la longueur d'onde $\lambda_0$ correspondant à la fréquence centrale $v_0$, le coefficient fractionnaire $\beta$ étant inférieur à 1/5 et de préférence inférieur à 3/20 ;
- la précision de la base de temps est inférieure au rapport de la précision de localisation sur la vitesse de la lumière ;
- la période d'échantillonnage $\Delta t_{ech}$ est inférieure au minimum d'une première durée minimale d'échantillonnage $\Delta t_{Shannon}$ correspondant à un critère de Shannon et d'une deuxième durée $\Delta t_B$ correspondant à la satisfaction de l'exigence d'une résolution radiométrique prédéterminée $\Delta T_B$,

  la première durée $\Delta t_{Shannon}$ étant égale à la moitié de la période correspondant à une longueur d'onde $\lambda_0$ d'une fréquence de mesure,

  la deuxième durée $\Delta t_B$ étant fonction de la résolution radiométrique prédéterminée $\Delta T_B$, d'une température d'antenne $T_A$, d'une température de récepteur $T_{rec}$, d'une largeur de bande passante de filtrage B, d'un nombre total (N+1) d'antennes élémentaires, d'une longueur D de l'antenne réseau, d'une surface efficace $S_e$ d'une antenne élémentaire, de la taille d'un pixel $T_{pixel}$, de la vitesse $V_{sat}$ de l'au moins un satellite ;
- la deuxième durée ($\Delta t_B$) satisfait l'équation :

$$\Delta t_B = \sqrt{2}\left(\frac{\Delta T_B}{T_A + T_{rec}}\right)\frac{S_e}{D^2}\frac{1}{\sqrt{B}}(N+1)\left(\frac{T_{pixel}}{V_{sat}}\right)^{\frac{3}{2}}$$

L'invention a également pour objet un système d'imagerie radiométrique par satellite destiné à cartographier au moins un paramètre caractéristique d'objets distants disposés sur une surface et détectable par le rayonnement électromagnétique multi-angulaire émis par les objets caractérisé en ce qu'il comprend une antenne réseau formée d'antennes élémentaires A(k) disposées à bord d'au moins un satellite mobile par rapport à la surface,

au moins un ensemble de réception connecté à l'antenne réseau apte à

horodater par une base de temps à précision élevée des positions successives P(t(i) d'une antenne élémentaire A(1) prédéterminée de l'antenne réseau servant de référence spatio-temporelle, les positions successives de l'antenne élémentaire de référence A(1) étant échantillonnées suivant une période d'échantillonnage $\Delta T_{ech}$ à des instants successifs t(i) ordonnés suivant un indice $\underline{i}$ et étant repérées dans un repère spatial fixe par rapport à la surface survolée, chaque antenne élémentaire A(k) étant associée une horloge locale H(k), pour chaque position successive échantillonnée P(t(i) de l'antenne élémentaire de référence A(1), synchroniser chaque horloge locale associée H(k) sur la base de temps, pour chaque position successive échantillonnée P(t(i)) de l'antenne élémentaire de référence A(1), déterminer les positions spatiales respectives des antennes élémentaires A(k) par rapport à l'antenne élémentaire de référence A(1),

à chaque instant d'échantillonnage t(i) correspondant à une position échantillonnée P(t(i) de l'antenne élémentaire A (1), mesurer de manière analytique un champ électromagnétique reçu par chaque antenne élémentaire A(k) et fournir pour chacune une composante en phase et d'une composante en quadrature,

affecter à chaque mesure analytique de champ électromagnétique E(k,t(i)) mesuré l'indice $\underline{k}$ de l'antenne élémentaire correspondante et la date t(i) d'échantillonnage correspondante,

et une unité de traitement apte à

pour un indice d'image $i_m$ prédéterminé, définir un domaine d'image temporel $D_{IM}(i_m)$ constitué les instants d'échantillonnage t(j) tels que la différence $t(i_m)$-t(j) est inférieure ou égale à une durée temporelle de domaine d'image d'mage $\Delta t_{IM}$ prédéterminée,

à chaque couple (k, j) d'indice $\underline{k}$ d'antenne élémentaire A(k) et d'indice d'instant d'échantillonnage $\underline{j}$ correspondant au domaine d'image temporel $D_{IM}(i_m)$, fournir un vecteur de mesure M(k, j) contenant ordonnés temporellement les échantillons des mesures du champ électromagnétique reçu par l'antenne élémentaire (A(k)) aux instants d'échantillonnage compris entre l'instant d'échantillonnage t(j) et l'instant d'échantillonnage $t(j - \dfrac{\Delta t_c}{\Delta t_{ech}})$, $\Delta t_c$ désignant une durée d'intégration de la corrélation entre deux vecteurs de mesure M(k,j), M(k',j'), et

construire une image $IM(i_m)$ à partir d'une fonction de visibilité spatiotemporelle comprenant un ensemble de coefficients de visibilités, au moins un coefficient de visibilité étant égal à la corrélation de deux vecteurs de mesure M(k,j), M(k', j') dont les indices d'échantillonnage j, j' sont distincts.

Suivant des modes particuliers de réalisation, le système d'imagerie radiométrique comporte l'une ou plusieurs des caractéristiques suivantes :

- l'antenne réseau comprend un premier segment d'antennes élémentaires alignées, espacé d'un deuxième segment d'antennes élémentaires ou d'une antenne isolée unique par une distance d'espacement inférieure ou égale à une taille de l'antenne réseau,
- chaque antenne élémentaire A(k) ayant un centre respectif C(k), les centres C(k), C(k+1) de deux antennes adjacentes d'un même segment sont séparées d'une demi-longueur d'onde, et
- le premier segment et le deuxième segment, respectivement le premier segment et l'antenne isolée sont orientés selon une même direction ;
- le système comprend un seul satellite et une seule antenne réseau d'extension unidimensionnelle de longueur D,
- l'antenne réseau comprend un seul segment d'antennes élémentaires alignées, le segment ayant une longueur D1 moitié de la longueur D de l'antenne réseau, et une antenne élémentaire isolée, séparée par un espace vide de même longueur D1 que celle du segment et alignée sur les antennes élémentaires du segment ;
- les antennes élémentaires de l'antenne réseau sont disposées sur deux satellites décrivant chacun une orbite polaire héliosynchrone et formant un vol en formation, le premier segment étant disposé sur le premier satellite et le deuxième segment étant disposé sur le deuxième satellite ;
- les altitudes des orbites polaires diffèrent d'une hauteur inférieure au double de la longueur d'un segment ; et
- le premier satellite et le deuxième satellite sont situés sur des orbites polaires héliosynchrones de même altitude, les satellites étant séparés dans la direction longitudinale d'une distance comprise entre une et deux longueurs d'un segment.

L'invention sera mieux comprise à la lecture de la description d'une forme de réalisation qui va suivre, donnée uniquement à titre d'exemple et faite en se référant aux dessins sur lesquels :

- la Figure 1 est une vue générale d'une première forme de réalisation d'un système d'imagerie radiométrique selon l'invention,
- la Figure 2 est une vue détaillée de l'antenne réseau radiométrique utilisée dans le système d'imagerie de la Figure 1 ;
- la Figure 3 est une vue détaillée par blocs fonctionnels d'un ensemble de réception de signaux radiométriques captés par l'antenne réseau de la Figure 2 et embarqué à bord du satellite du système de la Figure 1 ;
- la Figure 4 est une vue détaillée par bloc d'un module de mesure de l'ensemble de réception de la Figure 3 ;
- la Figure 5 est un ordinogramme d'un procédé d'imagerie radiométrique mis en oeuvre par le système d'imagerie décrit aux Figures 1 à 4 ;
- La Figure 6 est une représentation spatio-temporelle du réseau interférométrique correspondant au système décrit à la Figure 1 ;
- la Figure 7 est une vue générale d'une deuxième forme de réalisation d'un système d'imagerie radiométrique selon l'invention fondée sur une formation en vol de deux satellites se partageant le support des antennes élémentaires constituant l'antenne réseau,
- la Figure 8 est une vue détaillée d'une troisième forme de réalisation d'un système d'imagerie radiométrique selon l'invention.

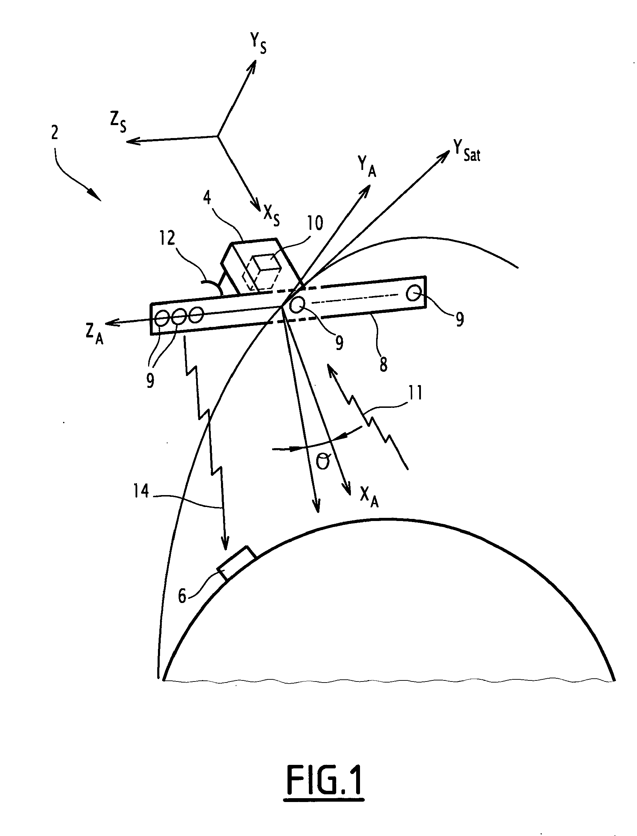

Suivant la Figure 1, un système d'imagerie radiométrique 2 comprend un satellite d'observation 4 en orbite autour de la Terre et une unité de traitement 6 des données d'observation recueillies et retransmises au sol par le satellite 4.

Le satellite d'observation 4 décrit une orbite polaire héliosynchrone de 755 kilomètres d'altitude, de période égale à 100 minutes et de vitesse linéaire désignée par $\overrightarrow{V_{sat}}$ ayant son module égal à 7 km/s.

Le satellite 4 est incliné par rapport à la direction Nadir selon un angle de tangage désigné par θ sur la figure 1 et égal à 31,2 degrés.

Un repère triaxial lié à la plateforme du satellite 4 désigné par $(X_S, Y_S, Z_S)$ comprend un axe $Y_S$ orienté selon le sens de la vitesse $\overrightarrow{V_{sat}}$ et un axe $X_S$ résultant de la rotation d'angle θ autour de l'axe $Y_S$ de l'axe de nadir.

Le satellite 4 comprend une antenne réseau 8 d'observation radiométrique formée par un réseau d'antennes élémentaires 9, un ensemble 10 de réception et de transformation de signaux radioélectriques, transmis au travers d'une liaison radioélectrique 11 et captés par l'antenne réseau 8, connecté en sortie de l'antenne réseau 8.

Le satellite 4 comprend également une antenne de télémesure 12 connectée en sortie de l'ensemble 10 de réception et apte à retransmettre vers l'unité de traitement 6 des données de mesures radiométriques au travers d'une liaison radioélectrique de télémesure 14.

L'antenne réseau 8 fonctionne dans une bande de fréquences dédiée uniquement à l'observation désignée par « bande L » dont les fréquences sont comprises entre 1400 et 1427 MHz.

Cette bande d'observation est centrée autour d'une fréquence $v_0$ correspondant à une longueur d'onde $λ_0$ égale à 21 cm et présentant une largeur de bande égale à 27 MHz.

Cette bande d'observation permet de mesurer des températures de brillance d'objets sous forme de rayonnements électromagnétiques polarisés et multi-angulaires émis par les objets, les températures de brillance étant représentatives notamment de l'humidité des sols et de la salinité des océans.

L'antenne réseau 8 est ici composée d'un ensemble d'antennes élémentaires 9 de structure identique mais disposées en des emplacements différents, désignées par A(k) pour les différencier, k étant un indice entier différent affecté à chaque antenne A(k).

Les antennes élémentaires A(k) sont disposées alignées suivant un axe d'extension longitudinale de l'antenne réseau 8 désigné par $Y_A$ et de même direction que l'axe $Y_S$ du satellite 4. Un repère triaxial lié à l'antenne réseau 8 désigné par $(X_A, Y_A, Z_A)$ comprend des axes $X_A, Y_A, Z_A$ dont les orientations respectives sont identiques à celles des axes $X_S, Y_S, Z_S$ du repère correspondant lié au satellite 4.

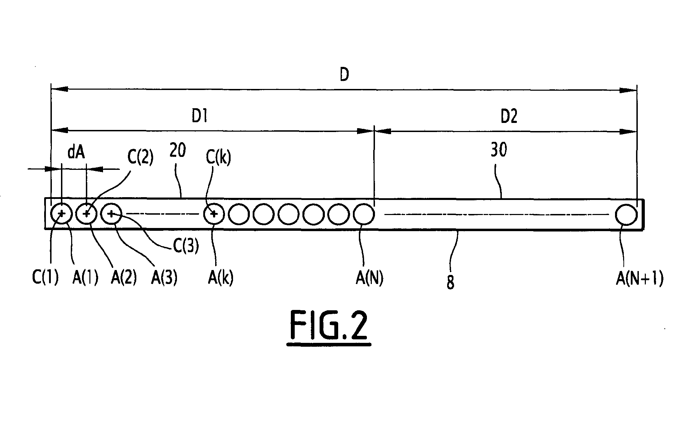

Plus précisément suivant la figure 2, l'antenne réseau 8 forme un réseau interférométrique d'antennes élémentaires et a une taille désignée par D.

L'antenne réseau 8 comprend un segment 20, ayant une longueur totale D1, égale ici à la moitié de D c'est-à-dire 25 mètres et composé d'un nombre entier N antennes élémentaires 20 successives alignées.

L'antenne réseau comprend également une unique antenne isolée A(N+1) séparée du segment 20 par un espace vide de longueur D2 sensiblement égale à D1 c'est-à-dire 25 mètres, l'antenne isolé A(N+1) étant alignée sur l'alignement des antennes élémentaires composant le segment 20.

La taille D de l'antenne réseau 8 est ici choisie de sorte que la résolution géométrique notée $R_g$ d'une image obtenue par les mesures radiométriques, c'est à dire la taille $T_{pixel}$ d'un pixel d'image soit égale à 4 km.

La résolution géométrique satisfaisant l'équation :

$$R_g = \frac{\lambda_0}{D} H \quad \text{(rel.1)}$$

avec H désignant l'altitude du satellite, il en résulte que la valeur D est égale à environ 50 mètres et la longueur D1 est égale à 25 mètres.

Les antennes élémentaires 9 du segment 20 sont par exemple des antennes de type « patch » classiques à cavité résonnante diélectrique ayant une surface rayonnante ou de réception en forme de disque.

Chaque antenne élémentaire A(k) d'indice $\underline{k}$ comprend un centre associé C(k).

Deux antennes élémentaires A(k), A(k+1) du segment 20 disposées adjacentes sont distantes par leurs centres respectifs C(k), C(k+1) d'une distance $d_A$ inférieure ou égale à une demi-longueur d'onde $\lambda_0/2$ de manière à satisfaire la condition d'échantillonnage de Shannon.

Ici, la distance $d_A$ est choisie égale à 10 cm et le nombre total N d'antenne élémentaires du segment 20 est ainsi égal à 250.

La taille D de l'antenne réseau 8, le nombre et l'agencement des antennes élémentaires permettent ainsi d'atteindre une résolution géométrique suivant la direction $Z_A$ perpendiculaire à la vitesse du satellite 4 égale à 4 km et de satisfaire les critères de reconstruction d'une image par une transformation de Fourier selon la direction $Z_A$ après utilisation de toutes les mesures de couples d'antennes, chaque couple définissant une base spatiale du réseau interférométrique formé par le réseau d'antennes élémentaires A(k).

La précision de localisation de chaque antenne élémentaire A(k) est ci égale à 3 mm.

En variante et de manière générale, la précision de localisation est égale au produit d'un coefficient fractionnaire $\beta$ de la longueur d'onde $\lambda_0$ par la longueur d'onde $\lambda_0$, le coefficient fractionnaire $\beta$ étant inférieur à 1/3 et de préférence inférieur ou égal à 3/20.

En variante, l'antenne réseau est pourvue de récepteurs de positionnement de type GPS (Global Positoning System) permettant d'estimer la déformée de l'antenne de réseau 8 en fonction de fluctuations de température à vitesse lente par rapport à la vitesse du satellite 4.

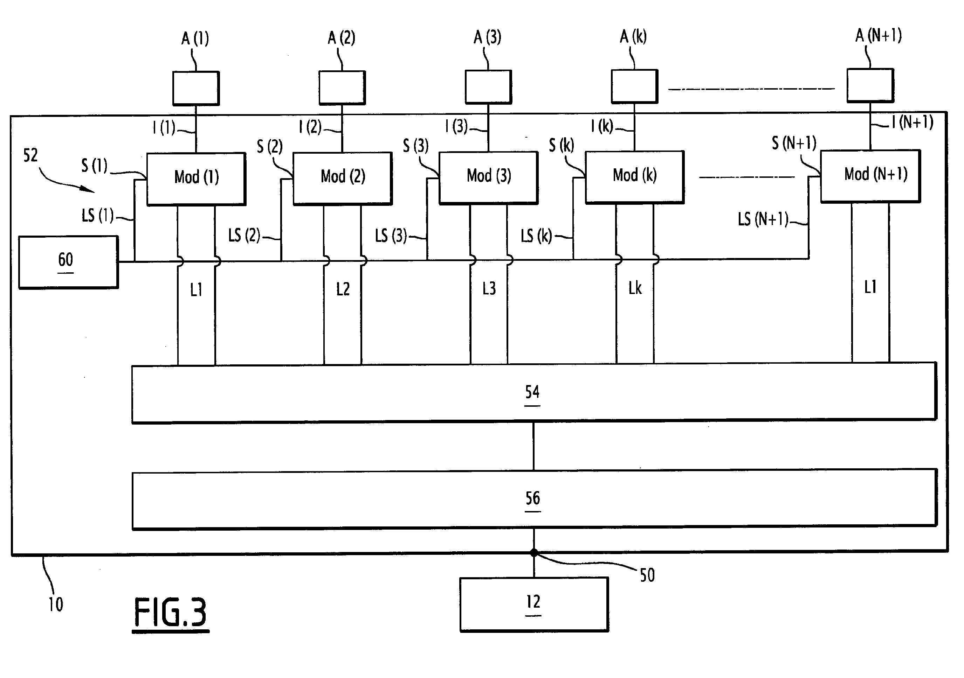

Suivant la Figure 3, l'ensemble de réception 10 comprend des bornes d'entrées I(k), l'indice d'antenne élémentaire k variant de 1 à N+1, chaque borne d'entrée I(k) étant connectée à une antenne élémentaire A(k) associée distincte et comprend une borne de sortie 50 connectée à l'antenne de télémesure 12.

L'ensemble de réception 10 comprend une batterie 52 de modules de mesures désignés par Mod(k), k variant de 1 à N+1, une mémoire de masse 54 connectée en entrée à chaque module de mesure Mod(k) au moyen d'une paire associée distincte L(k) de liaisons, et un unique émetteur de données de télémesure 56 connecté en entrée à la mémoire de masse 54 et en sortie à l'antenne de télémesure 12.

L'ensemble de réception 10 comprend également une base de temps 60 ou horloge maitresse à précision élevée qui est connectée en des entrées distinctes S(k), k variant de 1 à N+1, chaque entrée S(k) appartenant à un module de mesure Mod(k) distinct associé. Une liaison différente de synchronisation LS(k) relie la base de temps 60 à chaque entrée de synchronisation S(k).

La précision de la base de temps 60 est ici égale à 3/20 de la longueur d'onde $\lambda0$ divisé par la vitesse de la lumière c, c'est-à-dire égale à $10^{-11}$ secondes. Cette précision de la base de temps 60 correspond à la précision de localisation de chaque antenne élémentaire A(k) égale à 3 mm.

En variante et de manière générale, la précision absolue de la base de temps 60 est égale au produit d'un coefficient fractionnaire $\beta$ de la longueur d'onde $\lambda_0$ par la longueur d'onde $\lambda_0$ divisé par la vitesse de la lumière, le coefficient fractionnaire $\beta$ étant inférieur à 1/3 et de préférence inférieure ou égale à 3/20.

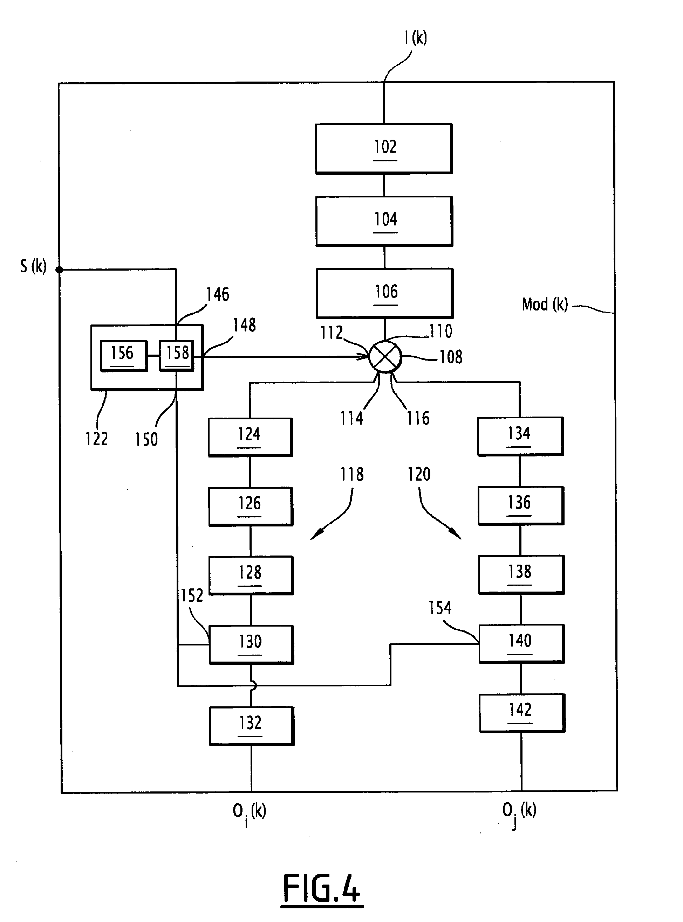

Suivant la figure 4, un module de mesure Mod(k) quelconque comprend de manière générique, connectés en série, un filtre de tête 102, un amplificateur à faible bruit 104, un filtre de canal 106 ou de bruit à bande passante désignée par B et un mélangeur abaisseur 108 de fréquences.

Le mélangeur abaisseur 108 comprend une première entrée 110 connectée au filtre de canal 106, une deuxième entrée 112 apte à recevoir une signal de fréquence de décalage ou de translation, une première borne de sortie 114, respectivement une deuxième borne de sortie 116 apte à fournir un signal de sortie en phase de fréquence intermédiaire (FI), respectivement un signal de sortie en quadrature de même fréquence intermédiaire (FI) correspondant à la partie réelle, respectivement la partie imaginaire d'un signal de sortie appelée analytique ou encore synthétisée.

Le module de mesure Mod(k) comprend également connectée à la première borne de sortie 114, respectivement la deuxième borne de sortie 116 du mélangeur abaisseur 108, une première chaine de traitement 118 à fréquence intermédiaire (FI), respectivement une deuxième chaîne de traitement 120 à fréquence intermédiaire(FI).

Le module de mesure Mod(k) comprend également une horloge propre H(k) désignée par 122 asservie sur la base de temps 60 à précision élevée, connectée par l'entrée S(k) à la base de temps 60, et également connectée à chaque chaine de traitement à fréquence intermédiaire 118, 120 ainsi qu'au mélangeur abaisseur 108.

La première chaine de traitement 118 à fréquence intermédiaire, respectivement la deuxième chaine de traitement 120 à fréquence intermédiaire comprennent, connectés en série, un premier filtre FI 124, un premier amplificateur FI 126, une première unité de correction et de réglage 128, une première unité d'échantillonnage 130, un premier numériseur 132, respectivement un deuxième filtre FI 134, un deuxième amplificateur FI 136, une deuxième unité de correction et de réglage 138, une deuxième unité d'échantillonnage 140, un deuxième numériseur 142.

Le premier numériseur 132, respectivement le deuxième numériseur 134 sont connectés à la première sortie Oi(k) en phase, respectivement la deuxième sortie Oq(k) en quadrature et sont aptes à fournir la partie réelle, respectivement la partie imaginaire quantifiée selon un nombre entier q prédéterminé de bits du signal de mesure analytique du champ électromagnétique reçu par l'antenne correspondante A(k). Le nombre entier q est un entier pouvant prendre une valeur quelconque y compris la valeur 1.

L'horloge 122 propre au module de mesure Mod(k) comprend une entrée 146 connectée à l'entrée de synchronisation S(k), une première sortie 148 connectée à la deuxième borne d' entrée 112 du mélangeur abaisseur 108 et une deuxième sortie 150 connectée à une entrée de commande 152 du premier échantillonneur 130 et à une entrée de commande 154 du deuxième échantillonneur 142.

L'horloge 122 propre au module de mesure Mod(k) comprend un générateur de temps local 156, par exemple un oscillateur à quartz, et une unité d'élaboration de signaux d'horloge 158 apte à asservir le signal d'horloge local sur la base de temps 60 à précision élevée et à délivrer des signaux d'horloge synchrone de la base de temps 60.

Ainsi, le module de mesure Mod(k) est apte à horodater avec une précision élevée les signaux mesurées localement par l'antenne élémentaire A(k) dans le même temps que celui fourni par la base de temps 60.

La bande passante B du filtre de canal 106 est choisie de telle sorte que la relation suivante est vérifiée :

$$B \leq \frac{V_{sat}}{D} \qquad \text{(rel. 2)}$$

avec $V_{sat}$ désignant le module de la vitesse du satellite 4 et D désignant la taille du réseau d'antennes élémentaires autrement dit la plus grande distance séparant deux antennes élémentaires de l'antenne réseau 8.

Ici, on choisit une valeur de bande passante B égale à 100 Hz.

De tels filtres intégrés à bande étroite fonctionnant aux longueurs d'onde voisines de $\lambda_0$ ont déjà été développés.

La durée d'échantillonnage $\Delta t_{ech}$ est choisie de telle sorte à être inférieure à la fois à une première durée d'échantillonnage $\Delta T_{Shannon}$ satisfaisant un critère de Shannon et à une deuxième durée $\Delta t_B$ correspondant à la satisfaction de l'exigence d'une résolution radiométrique souhaitée, notée $\Delta T_B$, c'est-à-dire satisfait l'inéquation :

$$\Delta t_{ech} \leq Min(\Delta t_{shannon}, \Delta t_B) \qquad \text{(rel.3)}$$

La première durée d'échantillonnage $\Delta T_{Shannon}$ satisfaisant un critère de Shannon est égale à la moitié de la période correspondant à la longueur d'onde $\lambda_0$, c'est-à-dire ici environ $1,25.10^{-5}$.

La deuxième durée $\Delta t_B$ correspondant à la satisfaction de l'exigence d'une résolution radiométrique désirée $\Delta T_B$ satisfait l'équation suivante :

$$\Delta t_B = \sqrt{2}\left(\frac{\Delta T_B}{T_A + T_{rec}}\right)\frac{S_e}{D^2}\frac{1}{\sqrt{B}}(N+1)\left(\frac{T_{pixel}}{V_{sat}}\right)^{\frac{3}{2}} \qquad \text{(rel.4)}$$

$T_A$ désignant la température d'antenne, $T_{rec}$ désignant la température du récepteur, B la largeur de bande passante de filtrage, N+1 le nombre total d'antennes élémentaires, D la longueur de l'antenne réseau 8, Se la surface efficace d'une antenne élémentaire, $T_{pixel}$ la taille d'un pixel, $V_{sat}$ la vitesse du satellite 4.

Pour une valeur du rapport $\left(\dfrac{\Delta T_B}{T_A + T_{rec}}\right)$ identique à celle du système SMOS, la valeur de $2*10^{-5}$ secondes est déterminée, ce qui correspondrait à un déplacement du satellite égal à 14 cm.

Il apparait ici dans ce cas précis, que la première durée d'échantillonnage $\Delta T_{Shannon}$ satisfaisant un critère de Shannon est la durée de dimensionnement de la période d'échantillonnage $\Delta t_{ech}$.

En variante, la fréquence du filtre de canal 106 est programmable, ce qui permet de sélectionner une température de brillance d'observation.

En variante, l'ensemble de réception est apte à mesurer plusieurs températures de brillance en utilisant au moins deux batteries de filtres de canal centrés à des fréquences centrales différentes.

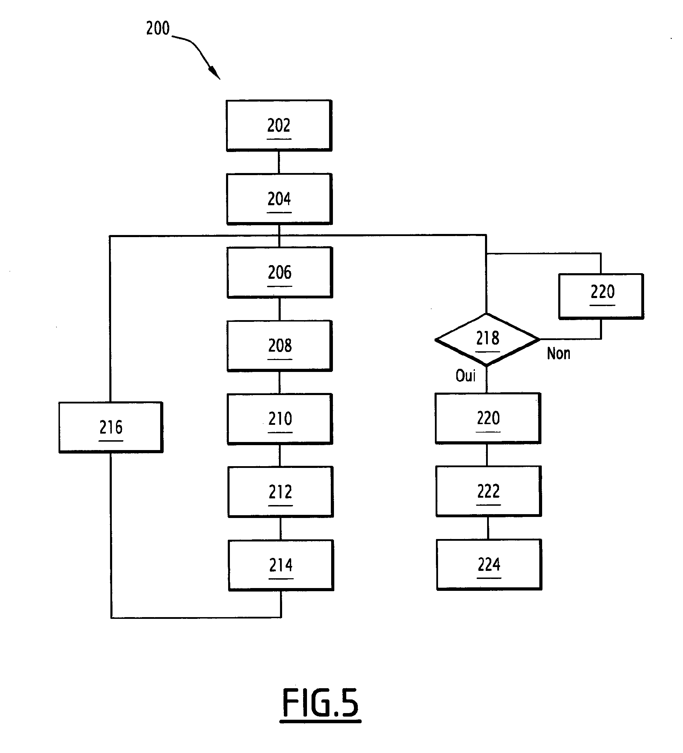

Suivant la Figure 5, un procédé d'imagerie radiométrique 200, destiné à cartographier au moins un paramètre caractéristique d'objets distants disposés sur une surface et détectable par le rayonnement électromagnétique multi-angulaire émis par les objets, et mis en oeuvre par le système décrit dans les figures 1 à 4, comprend un ensemble d'étapes 202, 204, 206, 208, 210, 212, 214, 216, 218, 220, 222, 224.

Dans une première étape 202, à chaque antenne élémentaire A(k) est associé un indice entier distinct k permettant d'identifier l'antenne élémentaire A(k).

Dans une étape suivante d'initialisation 204, une antenne élémentaire A(k) de l'antenne réseau 8 est sélectionnée comme référence spatiale par rapport aux autres antennes. Par exemple, l'antenne élémentaire A(1) est choisie.

Dans la même étape d'initialisation 204, un instant initial t(0) de démarrage d'échantillonnage de la position initiale P(t(0)) de l'antenne élémentaire de référence A(1) est fixé au travers de la mise à zéro d'un compteur d'indice d'échantillonnage i.

Dans la même étape d'initialisation 204, pour chaque antenne élémentaire A(k), l'horloge associée (H(k)) est synchronisée sur la base de temps 60 et les positions spatiales respectives des antennes élémentaires A(k) par rapport à l'antenne élémentaire de référence A(1) sont déterminées avec précision.

Dans une étape suivante 206, pour une valeur courante i de l'indice du compteur d'échantillonnage, la position échantillonnée P(t(i)) de l'antenne élémentaire A(1) sélectionnée du réseau d'antennes élémentaires est repérée dans un repère spatial fixe par rapport à la surface survolée par le satellite et horodatée par la base temps 60 à précision élevée suivant une coordonnée temporelle t(i),

Dans l'étape suivante 208, pour chaque antenne élémentaire A(k), la synchronisation de l'horloge associée (H(k)) sur la base de temps 60 est maintenue par une boucle de poursuite de synchronisation.

Cette étape de maintien de synchronisation qui fait suite à une phase d'acquisition dans l'étape d'initialisation 204 est effectuée par exemple à l'aide d'échange de signaux de signalisation et d'une boucle à verrouillage de phase.

Il est à remarquer que dans le cas où l'horloge locale est très stable les corrections de synchronisation sont effectuées selon des périodes de temps pouvant être longues.

Il est à remarquer également que si les positions relatives entre les antennes élémentaires A(k) ne varient pas au cours du temps des stratégies de synchronisation de groupes d'antennes peuvent être mises en oeuvre.

Dans une étape suivante 210, la détermination des positions spatiales respectives des antennes élémentaires A(k) par rapport à l'antenne élémentaire de référence A(1) est mise à jour le cas échéant.

Dans le cas de l'antenne décrite à la figure 2, les positions relatives des antennes élémentaires A(k) sont considérées ici invariantes dans le temps. L'étape de détermination proprement dite des positions relatives des antennes élémentaires n'est mise en oeuvre alors qu'une seule fois, les étapes de détermination suivantes se réduisant à un rappel de valeurs de position relatives sauvegardées.

Toutefois, si les positions relatives des antennes élémentaires A(k) varient au cours du temps à fable vitesse par rapport à la vitesse du satellite en raison par exemple de fluctuations de température subies par l'antenne, un mécanisme de détermination des positions relatives fondé sur des récepteurs de positionnement global et un modèle de déformation peut être mis en oeuvre.

Il est à remarquer qu'un mécanisme de détermination des positions relatives des antennes élémentaires est également mis en oeuvre lorsque l'antenne réseau est répartie sur des satellites en vol de formation en déterminant les positions et des attitudes relatives des satellites entre eux qui varient faiblement par rapport à la vitesse du satellite.

Dans une étape suivante 212, pour l'instant d'échantillonnage courant (t(i)) correspondant à la position échantillonnée P(t(i)) de l'antenne élémentaire A(1), le champ électromagnétique, par exemple électrique, reçu par chaque antenne élémentaire A(k) est mesuré de manière analytique afin de fournir pour chaque antenne élémentaire A(k) une composante en phase et d'une composante en quadrature du champ mesuré E(k, t(i)).

Dans une étape suivante 214, l'indice k de l'antenne élémentaire et la date t(i) d'échantillonnage correspondant à la mesure de champ électromagnétique E(t, k) est affecté à la valeur complexe du champ mesuré.

Puis, dans une étape suivante 216, après l'écoulement d'une période d'échantillonnage $\Delta T_{ech}$ à partir de t(i), le compteur des instants d'échantillonnage est incrémenté d'une unité et l'étape 206 est mise en oeuvre avec l'instant d'échantillonnage incrémenté. Ici, la valeur de la période d'échantillonnage $\Delta t_{ech}$ est prise égale à 1,25 $10^{-5}$ secondes.

En parallèle à l'exécution des étapes de boucle 206, 208, 210, 212, 214, 216, une étape de test 218 est effectuée pour vérifier si l'indice d'échantillonnage courant i dépasse une valeur de seuil $i_{seuil}$ prédéterminée. La valeur de seuil $i_{seuil}$ prédéterminée est définie par la relation

$$i_{seuil} = \frac{T_{pixel}}{V_{sat} \Delta T_{ech}} \text{ (rel.5)}$$

Ici, avec la vitesse du satellite égale à 7 km/s, la taille du pixel $T_{pixel}$ égale à 4 km, et la période d'échantillonnage $\Delta t_{ech}$ égale à 1,25.$10^{-5}$, la valeur de seuil est égale à environ 4715.

Si l'indice courant i ne dépasse pas la valeur de seuil prédéterminée, alors dans étape de temporisation 220, l'exécution ultérieure de l'étape 218 est retardée par un délai fixé.

Si l'indice d'échantillonnage i courant dépasse la valeur de seuil prédéterminée $i_{seuil}$, dans une étape 220, pour de valeurs de $i_m$ espacées par exemple de $T_{pixel}/\alpha V_{sat}/\Delta t_{ech}$, un domaine d'image temporel $D_{IM}(i_m)$ est défini en étant constitué par les instants d'échantillonnage (t(j)) tels que la différence $t(i_m)-t(j)$ est inférieure ou égale à une durée temporelle de domaine d'image d'mage $\Delta t_{IM}$ prédéterminée.

Ici, la durée temporelle de domaine d'image d'mage $\Delta t_{IM}$ est égale au rapport de la plus grande des distances D séparant un couple quelconque d'antennes élémentaires (A(k)) sur la vitesse de déplacement $V_{sat}$ du satellite 4.

Dans l'étape suivante 222, à chaque couple (k, j) d'indice (k) d'antenne élémentaire A(k) et d'indice d'instant d'échantillonnage j du domaine d'image temporel $D_{IM}(i_m)$, un vecteur de mesure M(k, j) est fourni contenant ordonnés temporellement les échantillons des mesures du champ électromagnétique reçu par l'antenne élémentaire A(k) aux instants d'échantillonnage compris entre l'instant d'échantillonnage t(j) et l'instant d'échantillonnage $t\left(j - \dfrac{\Delta t_c}{\Delta t_{ech}}\right)$, $\Delta t_c$ désignant une durée d'intégration de la corrélation entre deux vecteurs de mesure M(k,j), M(k',j'), et caractérisant le degré d'acceptabilité de l'effet de bougé dû au mouvement du satellite.

La durée d'intégration de la corrélation entre deux mesures est égale au produit d'un coefficient fractionnaire $\alpha$ de la taille d'un pixel divisé par la vitesse du satellite $V_{sat}$, la valeur du coefficient fractionnaire étant inférieure ou égale à 1/3 et de préférence égale à 1/5.

En considérant ici la valeur du coefficient fractionnaire $\alpha$ égale à 1/5, la durée d'intégration de la corrélation $\Delta t_c$ est égale à environ 0, 12 secondes.

Dans l'étape suivante 224 une image est construite à partir d'une fonction de visibilité spatiotemporelle calculée à partir :

d'une part, d'une matrice de bases spatio-temporelles correspondant à un interféromètre spatio-temporel, une base spatio-temporelle étant définie par la donnée d'un doublet de couples (k, j), (k',j') avec, ici k l'indice d'une première antenne élémentaire A(k) et j un indice d'échantillonnage de la première antenne élémentaire A(k), k' l'indice d'une deuxième antenne élémentaire A(k') et j' un indice d'échantillonnage de la deuxième antenne élémentaire A(k'), les indices k, k' variant entre 1 et 251, et les indices d'échantillonnage j variant entre i et i-$\Delta t_{IM}/\Delta t_{ech}$,

d'autre part, des produits de corrélation sur la durée $\Delta t_c$ entre les vecteurs de mesure M(k, j) , M(k', j') correspondant à chaque base ((k,j), (k',j')).

Un produit de corrélation définit un coefficient de visibilité noté $Vi_m(((k,j), (k',j'))$ et l'ensemble des coefficients de visibilité pour k, k' variant de 1 à N+1 et j, j' variant sur $D_{IM}(i_m)$ définit une fonction de visibilité Vi.

Dans l'étape 224, le domaine de Fourier de l'image $IM(i_m)$ est ainsi reconstruit au travers de la fonction de visibilité $Vi_m$ et l'image $IM(i_m)$ est finalement obtenue par un traitement classique d'inversion.

Parmi ces couples distincts, il existe des couples pour lesquels les instants d'échantillonnage sont différents. Ainsi, l'image reconstruite à partir de la fonction de visibilité est une véritable image obtenue par synthèse d'ouverture spatio-temporelle mettant oeuvre les relations de cohérence spatio-temporelles entre les différentes mesures M(k, j).

La fonction de visibilité s'écrit par l'expression générique suivante d'un coefficient de visibilité :

$$ V((k, j),(k', j')) = \overrightarrow{M(k, j)}.\overrightarrow{M(k', j')} = \sum_{l=0}^{l=\Delta t_c / \Delta t_{ech}} \overrightarrow{E(k, j-l)}.\overrightarrow{E^*(k', j'-l)} $$

l'opérateur * représentant l'opérateur de conjugaison et l'indice de sommation l variant de 0 au nombre de périodes d'échantillonnage $\Delta t_{ech}$ contenues dans une durée de corrélation $\Delta t_c$.

Le traitement d'inversion est fondé sur une relation de constitution reliant les coefficients de visibilité Vi((k,j), (k', j')) et la source de température de brillance de la surface observée désignée par S.

Le procédé permet à même résolution géométrique et même résolution radiométrique d'accroitre la surface d'ouverture synthétisée du radiomètre.

Le procédé et le système permet également d'améliorer la résolution géométrique sans augmenter le nombre d'antennes élémentaires, sans diminuer la surface d'ouverture et sans dégrader la résolution radiométrique, en utilisant une antenne unidimensionnelle plus simple à réaliser et à monter sur un satellite et ne présentant pas d'effet d'augmentation de masse drastique sur le satellite.

Le procédé permet d'améliorer la résolution radiométrique lorsque la fréquence d'échantillonnage $1/\Delta t_{ech}$ augmente.

En variante, le procédé utilise un réseau interférométrique d'antennes élémentaires A(k) disposées à bord d'au moins deux satellites mobiles par rapport à la surface observée, les satellites décrivant un vol en formation c'est-à-dire dont les positions relatives sont coordonnées finement.

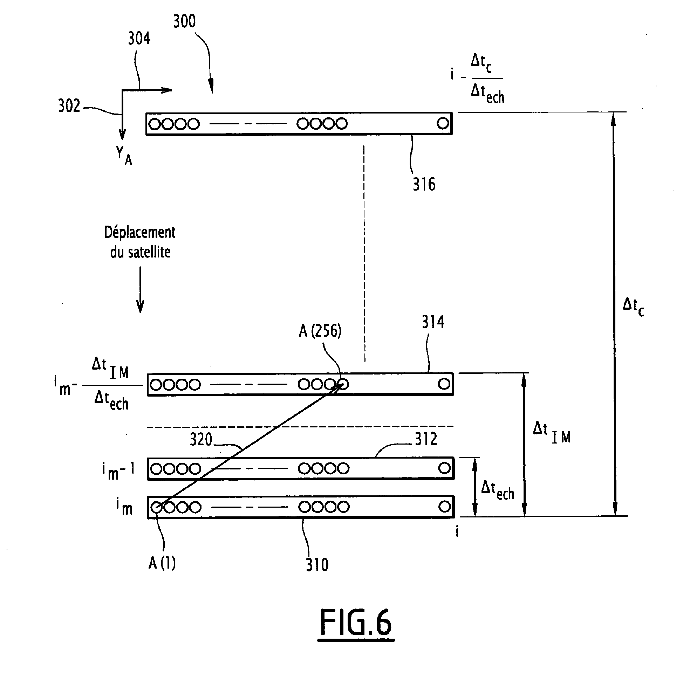

Suivant la figure 6, une représentation spatio-temporelle du réseau d'interférométrie spatio-temporelle 300 obtenue à l'aide de l'antenne réseau 8 spatiale est décrite suivant un premier axe 302 orienté selon le déplacement du satellite représentatif de la dimension temporelle et un deuxième axe 304, orienté selon la direction d'extension unidimensionnelle de l'antenne réseau 8 physique constituée par l'ensemble des antennes élémentaires et représentatif d'une dimension spatiale.

Le premier axe 302 est représentatif de l'extension de l'image $IM(i_m)$ selon le sens de déplacement du satellite tandis que le deuxième axe 304 est représentatif de l'extension de l'image $IM(i_m)$ dans une direction perpendiculaire au déplacement du satellite.

Différentes vues 310, 312, 314, 316 de l'antenne 8 sont représentées à différents instants d'échantillonnage.

La première vue 310 de l'antenne 8 correspond à la position de l'antenne 8 à l'instant d'échantillonnage $t(i_m)$ repéré par l'indice $i_m$.

La deuxième vue 312 de l'antenne 8 correspond à la positon de l'antenne 8 à l'instant d'échantillonnage $t(i_m-1)$ précédent immédiatement l'instant d'échantillonnage de la première vue 310.

La vue 314 de l'antenne 8 correspond à la position de l'antenne 8 à l'instant d'échantillonnage $t(i_m) - \Delta t_{IM}$ c'est-à-dire le dernier instant d'échantillonnage pris en compte dans la fourniture d'un vecteur de mesure M(k,j), k étant un indice quelconque d'une antenne élémentaire A(k) et j étant tel que t(j) appartient au domaine d'image temporel $D_{IM}(i_m)$.

La vue 318 est correspond à la position de l'antenne la plus éloignée temporellement de la vue 310 à l'horizon du temps d'intégration de corrélation $\Delta t_c$.

A titre d'exemple un vecteur de base 320 est représenté correspondant au doublet de couple ((k, j), (k',j')) avec k égal à 1, j égal à i, k' égal à 256 et j' égale à $i-\Delta t_{IM}/\Delta t_{ech}$.

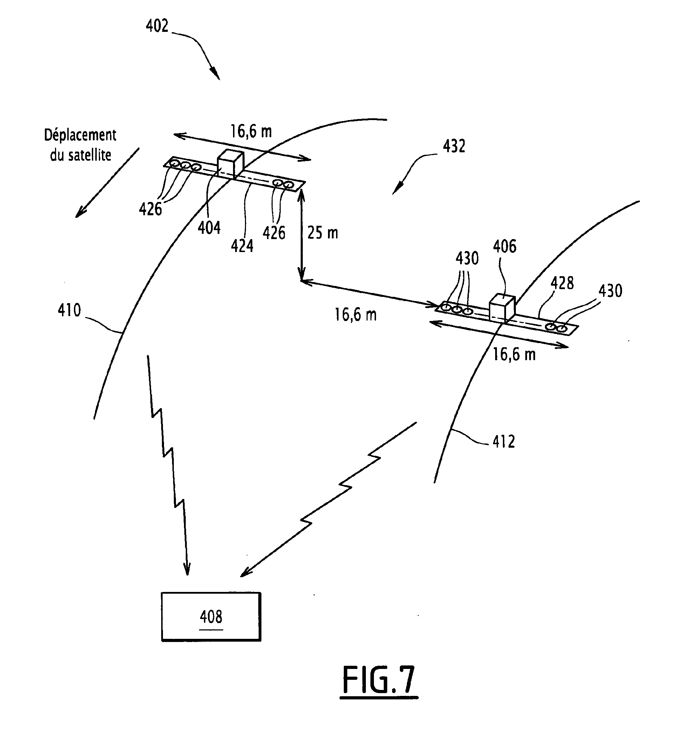

Suivant la Figure 7, une variante du système d'imagerie radiométrique 402 comprend un premier satellite 404 et un deuxième satellite 406 en orbite autour de la Terre, aptes à survoler la surface observée de manière coordonnée, et une unité de traitement 408 des données d'observation recueillies et retransmises au sol par les deux satellites.

Le premier satellite d'observation 404 décrit une première orbite polaire 410 héliosynchrone de 755 kilomètres d'altitude, de période égale à 100 minutes et de vitesse linéaire désignée par $\overrightarrow{V_{sat}}$ ayant son module égal à 7 km/s.

Le deuxième satellite d'observation 406 décrit une deuxième orbite polaire 412 décalée en longitude d'environ 16,60 mètres au niveau de l'équateur par rapport à la première orbite, l'altitude étant modulée selon une amplitude de $\pm$ 25 mètres autour d'une altitude centrale identique à celle de la première orbite de sorte à éviter une collision aux pôles et à assure un maintien côte à côte des satellites à une même latitude.

Les satellites 404 et 406 sont supposés ici ne pas être inclinés par rapport à leur direction Nadir respective.

Le premier satellite 404 comprend un premier segment 424 d'antennes élémentaires 426 et, non représentés, un premier ensemble de réception, une première antenne de télémesure apte à retransmettre vers l'unité de traitement 408 les données de mesures radiométriques des champs électromagnétiques reçus par les antennes élémentaires 426 du premier segment 424.

Le deuxième satellite 406 comprend un deuxième segment 428 d'antennes élémentaires 430 et, non représentés sur la Figure 7, un deuxième ensemble de réception, une deuxième antenne de télémesure apte à retransmettre vers l'unité de traitement 408 les données de mesures radiométriques des champs électromagnétiques reçus par les antennes élémentaires 430 du deuxièmes segment 428.

Le premier satellite 404 et le deuxième satellite comprennent également des moyens de détermination à précision élevée de leurs positions et attitudes relatives, utilisant par exemple des lasers.

Les antennes élémentaires 426 et 430 sont identiques à celles décrites à la Figure 2.

Les longueurs du premier segment 424 et du deuxième segment 428 sont identiques et égales à 16,6 mètres.

L'architecture du premier ensemble de réception diffère de l'architecture de l'ensemble de réception décrite à la Figure 3 en ce qu'une première interface de liaison inter-satellites est connectée à la base de temps à précision élevée du premier ensemble de réception.

L'architecture du deuxième ensemble de réception diffère de l'architecture de l'ensemble de réception décrite à la Figure 3 en ce que la base de temps est remplacée par une deuxième interface de liaison inter-satellites compatible de la première interface de liaison inter-satellite.

Les deux segments 424 et 428 forment ainsi une antenne réseau 432 analogue à l'antenne réseau 8 décrite dans la figure 2.

L'antenne réseau 432 diffère toutefois de l'antenne réseau 8 de la Figure 2 en ce que les positions relatives des antennes élémentaires du deuxième segment par rapport aux antennes élémentaires du premier segment en raison d'un déplacement relatif entre le premier satellite.

Même si ce déplacement relatif reste confiné dans un volume de 25 m3 environ, varie lentement par rapport à la vitesse du satellite et reste négligeable pendant la durée de temps d'intégration de corrélation, il est nécessaire de corriger régulièrement les positions des antennes élémentaires A(k) par rapport à une antenne élémentaire de référence A(1).

Cette correction est mise en oeuvre à partir de la connaissance des positions précises des antennes élémentaires par rapport à leur segment d'appartenance et à la connaissance de la position relative des segments 424 et 428.

La fourniture d'un horodatage précis par chaque antenne élémentaire est réalisée par la synchronisation de l'horloge locale associée à l'antenne élémentaire sur unique base de temps à précision élevée embarquée à bord du premier satellite 404.

L'antenne réseau 432 fonctionne de manière analogue à l'antenne réseau 8 et le procédé d'imagerie radiométrique décrit à la Figure 5 est applicable.

L'avantage procuré par le découpage de l'antenne réseau en deux est la réalisation de satellites plus petits sur lesquels sont montées des antennes plus petites, même si ces antennes plus petites ne constituent que des segments de l'antenne réseau 432.

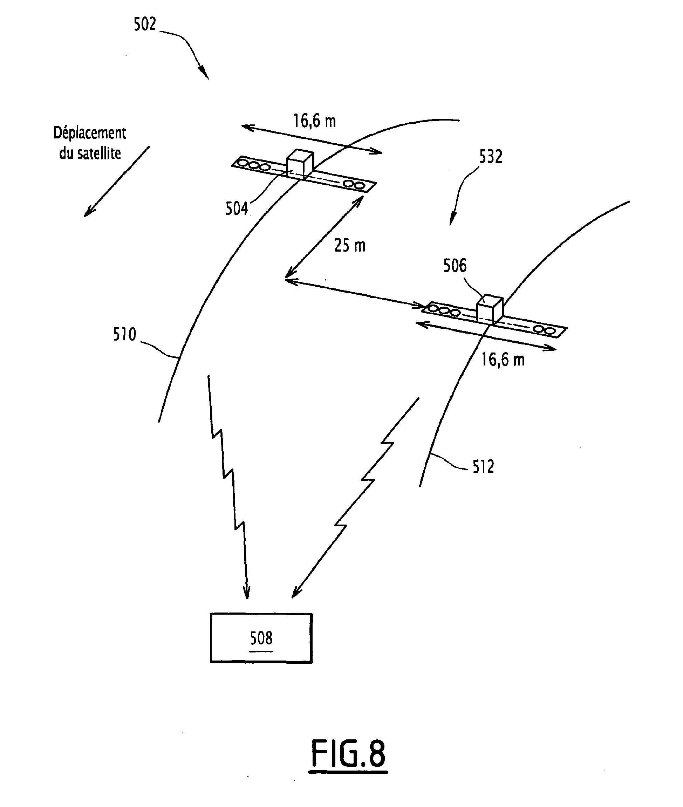

Suivant la Figure 8, une variante 502 du système d'imagerie radiométrique comprend un premier satellite 504, respectivement un deuxième satellite 506, identique au premier satellite 404, respectivement au deuxième satellite 406 de la Figure 7, les deux satellites 504 et 506 en orbite autour de la Terre étant aptes à survoler la surface observée de manière coordonnée, et une unité de traitement 508 identique à l'unité 408 de la Figure 7.

L'orbite 510 du premier satellite 504 est identique à celle du premier satellite 404 de la Figure 7.

Le deuxième satellite 506 décrit une orbite polaire 512 héliosynchrone, de même altitude que l'altitude de l'orbite 510 du premier satellite 504 et décalée en permanence de 25 mètres en latitude.

L'orbite polaire 512 est décalée en longitude d'environ 16,60 mètres au niveau de l'équateur par rapport à la première orbite.

Ainsi est évitée une collision des satellites aux pôles.

L'antenne réseau 532 correspondante fonctionne de manière analogue à l'antenne réseau 432 et le procédé d'imagerie radiométrique décrit à la Figure 5 est applicable.

La configuration de la Figure 8 présente l'avantage par rapport à celle de la Figure 7 de ne pas à avoir à ajuster la hauteur du deuxième satellite par rapport au premier satellite.

**Revendications**

**1.** Procédé d'imagerie radiométrique destiné à cartographier au moins un paramètre caractéristique d'objets distants disposés sur une surface et détectable par le rayonnement électromagnétique multi-angulaire émis par les objets, le procédé utilisant une antenne réseau (8 ; 432 ; 532) formée d'antennes élémentaires (A(k)) disposées à bord d'au moins un satellite (4 ; 404, 406; 504, 506) mobile par rapport à la surface, le procédé étant **caractérisé en ce qu'**il comprend les étapes consistant à :

identifier (202) chaque antenne élémentaire (A(k)) par un indice k,

horodater (206) par une base de temps (60) des positions successives (P(t(i))) d'une antenne élémentaire (A(1)) prédéterminée de l'antenne réseau (8 ; 432, 532) servant de référence spatio-temporelle, les positions successives de l'antenne élémentaire de référence (A(1)) étant échantillonnées suivant une période d'échantillonnage ($\Delta t_{ech}$) à des instants successifs (t(i)) ordonnés suivant un indice (i) et étant repérées dans un repère spatial fixe par rapport à la surface survolée,

à chaque antenne élémentaire (A(k)) étant associée une horloge locale (H(k)), pour chaque position successive échantillonnée (P(t(i))) de l'antenne élémentaire de référence A(1), synchroniser (208) chaque horloge locale associée (H(k)) sur la base de temps (60),

pour chaque position successive échantillonnée (P(t(i)) de l'antenne élémentaire de référence (A(1)), déterminer (210) les positions spatiales respectives des antennes élémentaires A(k) par rapport à l'antenne élémentaire de référence (A(1)),

à chaque instant d'échantillonnage (t(i)) correspondant à une position échantillonnée (P(t(i))) de l'antenne élémentaire (A(1)), mesurer (212) de manière analytique un champ électromagnétique reçu par chaque antenne élémentaire (A(k)) et fournir pour chacune une composante en phase et une composante en quadrature du champ,

affecter (214) à chaque mesure analytique de champ électromagnétique (E(k,t(i))) mesuré l'indice (k) de l'antenne élémentaire correspondante et la date (t(i)) d'échantillonnage correspondante,

pour un indice d'image ($i_m$) prédéterminé, définir (220) un domaine d'image temporel ($D_{IM}(i_m)$) constitué par les instants d'échantillonnage (t(j)) tels que la différence $t(i_m)-t(j)$ est inférieure ou égale à une durée temporelle de

domaine d'image $\Delta t_{IM}$ prédéterminée,

à chaque couple (k, j) d'indice (k) d'antenne élémentaire (A(k)) et d'indice d'instant d'échantillonnage (j) correspondant au domaine d'image temporel $D_{IM}(i_m)$, fournir (222) un vecteur de mesure M(k, j) contenant ordonnés temporellement les échantillons des mesures du champ électromagnétique reçu par l'antenne élémentaire (A(k)) aux instants d'échantillonnage compris entre l'instant d'échantillonnage t(j) et l'instant d'échantillonnage $t(j - \dfrac{\Delta t_c}{\Delta t_{ech}})$, $\Delta t_c$ désignant une durée d'intégration de la corrélation entre deux vecteurs de mesure M(k,j), M(k',j'),

construire (224) une image ($IM(i_m)$) à partir d'une fonction de visibilité spatio-temporelle comprenant un ensemble de coefficients de visibilités, au moins un coefficient de visibilité étant égal à la corrélation de deux vecteurs de mesure M(k,j), M(k', j') dont les indices d'échantillonnage j, j' sont distincts.

2. Procédé d'imagerie radiométrique selon la revendication 1, **caractérisé en ce qu'**une taille de pixel ($T_{pixel}$) étant prédéterminée et l'au moins un satellite (4 ; 404 ; 504) portant l'antenne de référence élémentaire (A(1)) présentant une vitesse de déplacement par rapport à la surface observée ($V_{sat}$), la durée d'intégration de corrélation ($\Delta t_c$) est égale au produit d'un coefficient fractionnaire ($\alpha$) par la taille ($T_{pixel}$) d'un pixel divisé par la vitesse ($V_{sat}$) de l'au moins un satellite (4 ; 404 ; 504).

3. Procédé d'imagerie radiométrique selon la revendication 2, **caractérisé en ce que** le coefficient fractionnaire ($\alpha$) est inférieur ou égal à 1/3 et de préférence égal à 1/5.

4. Procédé d'imagerie radiométrique selon l'une quelconque des revendications 2 à 3, **caractérisé en ce que**
la durée temporelle de domaine d'image ($\Delta t_{IM}$) est égale au rapport de la plus grande des distances (D) séparant un couple quelconque d'antennes élémentaires (A(k)) sur la vitesse de déplacement ($V_{sat}$) de l'au moins un satellite (4 ; 404 ; 504), et
**en ce qu'**une bande passante (B) de filtrage des fréquences autour d'une fréquence central ($v_0$) du champ électromagnétique mesuré par chacune des antennes élémentaires (A(k)) est inférieure ou égale au rapport de la vitesse de déplacement ($V_{sat}$) de l'au moins un satellite (4 ; 404 ; 504) sur la plus grande des distances (D) séparant un couple quelconque d'antennes élémentaires (A(k)).

5. Procédé d'imagerie radiométrique selon l'une quelconque des revendications 1 à 4, **caractérisé en ce qu'**une bande de fréquences de mesure du champ électromagnétique reçu par les antennes élémentaires (A(k)) est comprise dans la bande L et de préférence dans la bande des fréquences comprises entre 1400 et 1427 MHz.

6. Procédé selon l'une quelconque des revendications 4 à 5, **caractérisé en ce que** la précision de localisation d'une antenne élémentaire (A(k)) est égale au produit d'un coefficient fractionnaire ($\beta$) par la longueur d'onde ($\lambda_0$) correspondant à la fréquence centrale ($v_0$), le coefficient fractionnaire ($\beta$) étant inférieur à 1/5 et de préférence inférieur à 3/20.

7. Procédé selon la revendication 6, **caractérisé en ce que** la précision de la base de temps (60) est inférieure au rapport de la précision de localisation sur la vitesse de la lumière.

8. Procédé selon l'une quelconque des revendications 1 à 7, **caractérisé en ce que** la période d'échantillonnage ($\Delta t_{ech}$) est inférieure ou égale au minimum d'une première durée minimale d'échantillonnage ($\Delta t_{Shannon}$) correspondant à un critère de Shannon et d'une deuxième durée ($\Delta t_B$) correspondant à la satisfaction de l'exigence d'une résolution radiométrique prédéterminée ($\Delta T_B$),
la première durée ($\Delta t_{Shannon}$) étant égale à la moitié de la période correspondant une longueur d'onde ($\lambda_0$) d'une fréquence de mesure,
la deuxième durée ($\Delta t_B$) étant fonction de la résolution radiométrique prédéterminée ($\Delta T_B$), d'une température d'antenne ($T_A$), d'une température de récepteur $T_{(rec)}$, d'une largeur de bande passante de filtrage (B), d'un nombre total (N+1) d'antennes élémentaires, d'une longueur (D) de l'antenne réseau (8), d'une surface efficace (Se) d'une antenne élémentaire, de la taille d'un pixel ($T_{pixel}$), de la vitesse ($V_{sat}$) de l'au moins un satellite(4 ; 404 ; 504).

9. Procédé selon la revendication 8, **caractérisé en ce que** la deuxième durée ($\Delta t_B$) satisfait l'équation :

$$\Delta t_B = \sqrt{2}\left(\frac{\Delta T_B}{T_A + T_{rec}}\right)\frac{S_e}{D^2}\frac{1}{\sqrt{B}}(N+1)\left(\frac{T_{pixel}}{V_{sat}}\right)^{\frac{3}{2}}$$

**10.** Système d'imagerie radiométrique destiné à cartographier au moins un paramètre caractéristique d'objets distants disposés sur une surface et détectable par le rayonnement électromagnétique multi-angulaire émis par les objets **caractérisé en ce qu'**il comprend

une antenne réseau (8, 432, 532) formée d'antennes élémentaires (A(k)) disposées à bord d'au moins un satellite (4 ; 404, 406; 504, 506) mobile par rapport à la surface,

au moins un ensemble de réception connecté à l'antenne réseau (8 ; 432 ; 532) apte à

horodater par une base de temps (60) à précision élevée des positions successives (P(t(i)) d'une antenne élémentaire (A(1)) prédéterminée de l'antenne réseau (8, 432, 532) servant de référence spatio-temporelle, les positions successives de l'antenne élémentaire de référence (A(1)) étant échantillonnées suivant une période d'échantillonnage $\Delta T_{ech}$ à des instants successifs (t(i)) ordonnés suivant un indice (i) et étant repérées dans un repère spatial fixe par rapport à la surface survolée,

chaque antenne élémentaire (A(k)) étant associée une horloge locale (H(k)), pour chaque position successive échantillonnée (P(t(i)) de l'antenne élémentaire de référence A(1), synchroniser chaque horloge locale associée (H(k)) sur la base de temps (60),

pour chaque position successive échantillonnée (P(t(i)) de l'antenne élémentaire de référence (A(1)), déterminer les positions spatiales respectives des antennes élémentaires A(k) par rapport à l'antenne élémentaire de référence (A(1)),

à chaque instant d'échantillonnage (t(i)) correspondant à une position échantillonnée (P(t(i)) de l'antenne élémentaire (A(1)), mesurer de manière analytique un champ électromagnétique reçu par chaque antenne élémentaire (A(k)) et fournir pour chacune une composante en phase et d'une composante en quadrature,

affecter à chaque mesure analytique de champ électromagnétique (E(k,t(i))) mesuré l'indice (k) de l'antenne élémentaire correspondante et la date (t(i)) d'échantillonnage correspondante,

et une unité de traitement (6) apte à

pour un indice d'image ($i_m$) prédéterminé, définir (220) un domaine d'image temporel ($D_{IM}(i_m)$) constitué par les instants d'échantillonnage (t(j)) tels que la différence t($i_m$)-t(j) est inférieur ou égal à une durée temporelle de domaine d'image d'mage $\Delta t_{IM}$ prédéterminée,

à chaque couple (k, j) d'indice (k) d'antenne élémentaire (A(k)) et d'indice d'instant d'échantillonnage (j) correspondant au domaine d'image temporel ($D_{IM}(i_m)$), fournir (222) un vecteur de mesure M(k, j) contenant ordonnés temporellement les échantillons des mesures du champ électromagnétique reçu par l'antenne élémentaire (A(k)) aux instants d'échantillonnage compris entre l'instant d'échantillonnage t(j) et l'instant d'échantillonnage $t(j - \frac{\Delta t_c}{\Delta t_{ech}})$ ,

$\Delta t_c$ désignant une durée d'intégration de la corrélation entre deux vecteurs de mesure M(k,j), M(k',j'),

construire (224) une image ($IM(i_m)$) à partir d'une fonction de visibilité spatio-temporelle comprenant un ensemble de coefficients de visibilités, au moins un coefficient de visibilité étant égal à la corrélation de deux vecteurs de mesure M(k,j), M(k', j') dont les indices d'échantillonnage j, j' sont distincts.

**11.** Système d'imagerie radiométrique selon la revendication 10, **caractérisé en ce que**

l'antenne réseau (8 ; 432 ; 532) comprend un premier segment (20 ; 424), d'antennes élémentaires alignées espacé d'un deuxième segment (428) d'antennes élémentaires ou d'une antenne isolé unique (A(N+1)) par une distance d'espacement inférieure ou égale à la moitié d'une taille de l'antenne réseau (8 ; 432 ; 532),

**en ce que** chaque antenne élémentaire (A(k)) ayant un centre respectif (C(k)), les centres (C(k), C(k+1)) de deux antennes adjacentes d'un même segment (20, 424, 428) étant séparés d'une demi-longueur d'onde($\lambda_0/2$), et **en ce que**

le premier segment (424) et le deuxième segment (428), respectivement le premier segment (20) et l'antenne isolée (A(N+1)) sont orientés selon une même direction.

**12.** Système d'imagerie radiométrique selon la revendication 11, **caractérisé en ce qu'**il comprend un seul satellite (4) et une seule antenne réseau (8) d'extension unidimensionnelle de longueur (D),

**en ce que** l'antenne réseau (8) comprend un seul segment (20) d'antennes élémentaires alignées, le segment (20) ayant une longueur (D1) moitié de la longueur (D) de l'antenne réseau (8), et une antenne élémentaire isolée (A(N+1)), séparée par un espace vide (30) de même longueur (D1) que celle du segment (20) et alignée sur les antennes élémentaires du segment (20).

13. Système selon la revendication 11, **caractérisé en ce que** les antennes élémentaires (426 ; 436) de l'antenne réseau (432 ; 532) sont disposées sur deux satellites (404, 406 ; 504, 506) décrivant chacun une orbite polaire héliosynchrone et formant un vol en formation, le premier segment (424) étant disposé sur le premier satellite (404 ; 504) et le deuxième segment (428) étant disposé sur le deuxième satellite (406 ; 506).

14. Système selon la revendication 13, **caractérisé en ce que** les altitudes des orbites polaires diffèrent d'une hauteur inférieure au double de la longueur d'un segment.

15. Système selon la revendication 13 **caractérisé en ce que** le premier satellite (504) et le deuxième satellite (506) sont situés sur des orbites polaires héliosynchrones de même altitude, les satellites (504, 506) étant séparés dans la direction longitudinale d'une distance comprise entre une et deux longueurs d'un segment.

**Patentansprüche**

1. Bildgebendes radiometrisches Verfahren, das dazu dient, mindestens einen charakteristischen Parameter von auf einer Oberfläche angeordneten entfernten Objekten zu kartographieren, der über eine von den Objekten mehrwinklig emittierte elektromagnetische Strahlung detektierbar ist, wobei das Verfahren eine Netzantenne (8; 432; 532) verwendet, die aus Elementarantennen (A(k)) gebildet wird, die auf mindestens einem beweglich zur Oberfläche vorgesehenen Satelliten (4, 404, 406; 504, 506) angeordnet sind, wobei das Verfahren **dadurch gekennzeichnet ist, dass** es die folgenden Schritte umfasst:

Identifizieren (202) einer jeden Elementarantenne (A(k)) durch einen Index k,
Versehen (206) von aufeinanderfolgenden Positionen (P(t(i))) einer vorbestimmten Elementarantenne (A(1)) der Netzantenne (8; 432, 532) mit einer Zeitbasis (60), die als raumzeitliche Referenz dient, wobei die aufeinanderfolgenden Positionen der Referenzelementarantenne (A(1)) gemäß einer Abtastperiode ($\Delta t_{ech}$) bei aufeinanderfolgenden Zeitpunkten (t(i)), die nach einem Index (i) geordnet sind, ausgewählt werden und gemäß einem in Bezug auf die überflogene Oberfläche feststehenden Raumkoordinatensystem geortet werden,
wobei jeder Elementarantenne (A(k» für jede aufeinanderfolgende ausgewählte Position (P(t(i))) der Referenzelementarantenne (A(1)) eine lokale Uhr (H(k)) zugeordnet wird und jede zugeordnete lokale Uhr (H(k)) mit der Zeitbasis synchronisiert wird (208),
für jede ausgewählte aufeinanderfolgende Position (P(t(i))) der Referenzelementarantennen (A(1)) Bestimmen (210) der jeweiligen Raumpositionen der Elementarantennen (A(k)) in Bezug auf die Referenzelementarantenne (A(1)),
bei jedem Abtastzeitpunkt (t(i)), der mit einer ausgewählten Position (P(t(i))) der Elementarantenne (A(1)) korrespondiert, Messen (212) in analytischer Weise eines elektromagnetischen Feldes, das von jeder Elementarantenne (A(k) empfangen wird und Liefern für jede eine  Phasenkomponente und einer Quadraturkomponente des Feldes,
Bestimmen (214) für jede analytische Messung des gemessenen elektromagnetischen Feldes (E(k,t(i))) den Index (k) der korrespondierenden Elementarantenne und den Zeitpunkt (t(i)) der korrespondierenden Abtastung,
für einen vorbestimmten Bildindex($i_m$) Definieren (220) einer zeitlichen Bilddomäne ($D_{IM}(i_m)$), die durch die Abtastzeitpunkte (t(j)) gebildet wird, derart, dass die Differenz $t(i_m)-t(j)$ kleiner oder gleich einer vorbestimmten zeitlichen Dauer $\Delta t_{IM}$ der Bilddomäne ist,
für jedes Paar (k, j) des Index (k) der Elementarantenne (A(k)) und des Index (j) des Abtastzeitpunktes korrespondierend zu der zeitlichen Bilddomäne ($D_{IM}(i_m)$, Liefern (222) eines Messvektors M(k,j), der, zeitlich geordnet, die Proben der Messungen des elektromagnetischen Feldes, das von der Elementarantenne zu den Zeitpunkten der Abtastung zwischen dem Abtastzeitpunkt (t(j)) und dem Abtastzeitpunkt $t\left(j - \dfrac{\Delta t_c}{\Delta t_{ech}}\right)$ empfangen wird,
enthält, wobei $\Delta t_c$ eine Dauer der Integration der Korrelation zwischen zwei Messvektoren M(k, j), M(k', j') bezeichnet,
Konstruieren (224) eines Bildes (IM($I_m$)) aus einer raumzeitlichen Visibilitätsfunktion, die eine Menge von Visibilitätskoeffizienten umfasst,

wobei mindestens ein Visibilitätskoeffizient gleich der Korrelation von zwei Messvektoren M(k, j), M(k', j') ist, deren Abtastindizes j, j verschieden sind.

2. Bildgebendes radiometrisches Verfahren nach Anspruch 1, **dadurch gekennzeichnet, dass** eine Pixelgröße ($T_{pixel}$) vorbestimmt ist und der mindestens eine die Referenzelementarantenne (A(1)) tragende Satellit (4; 404; 504) eine Bewegungsgeschwindigkeit ($V_{sat}$) in Bezug auf die betrachtete Oberfläche aufweist und dass die Dauer der Integration der Korrelation ($\Delta t_c$) gleich dem Produkt eines Bruchkoeffizienten ($\alpha$) der Pixelgröße ($T_{pixel}$) geteilt durch die Geschwindigkeit ($V_{sat}$) des mindestens einen Satelliten (4; 404; 504) ist.

3. Bildgebendes radiometrisches Verfahren nach Anspruch 2, **dadurch gekennzeichnet, dass** der Bruchkoeffizient ($\alpha$) kleiner oder gleich 1/3 und vorzugsweise gleich 1/5 ist.

4. Bildgebendes radiometrisches Verfahren nach einem beliebigen der Ansprüche 2 bis 3, **dadurch gekennzeichnet, dass** die zeitliche Dauer ($\Delta t_{IM}$) der Bilddomäne gleich dem Verhältnis der größten der Entfernungen (D), die ein beliebiges Paar von Elementarantennen (A(k)) trennt, zu der Bewegungsgeschwindigkeit ($V_{sat}$) des mindestens einen Satelliten (4; 404; 504) ist, und dass eine Bandbreite (B) der Filterung von Frequenzen um eine Mittelfrequenz ($v_0$) des von jeder Elementarantennen (A(k)) gemessenen elektromagnetischen Feldes kleiner oder gleich dem Verhältnis der Bewegungsgeschwindigkeit ($V_{sat}$) des mindestens einen Satelliten (4; 404; 504) zu dem größten der Entfernungen (D), die ein beliebiges Paar von Elementarantennen (A(k)) trennt, ist.

5. Bildgebendes radiometrisches Verfahren nach einem beliebigen der Ansprüche 1 bis 4, **dadurch gekennzeichnet, dass** eine Frequenzbandbreite der Messung des von den Elementarantennen (A(k)) empfangenen elektromagnetischen Feldes in dem Band L eingeschlossen ist und vorzugsweise in dem Frequenzband zwischen 1400 und 1427 MHz liegt.

6. Bildgebendes radiometrisches Verfahren nach einem beliebigen der Ansprüche 4 bis 5, **dadurch gekennzeichnet, dass** die Genauigkeit der Lokalisierung einer Elementarantenne (A(k)) gleich dem Produkt eines Bruchkoeffizienten ($\beta$) mit der Wellenlänge ($\lambda_0$) entsprechend der Mittelfrequenz ($v_0$) ist, wobei der Bruchkoeffizient ($\beta$) kleiner als 1/5 und vorzugsweise kleiner als 3/20 ist.

7. Bildgebendes radiometrisches Verfahren nach Anspruch 6, **dadurch gekennzeichnet, dass** die Genauigkeit der Zeitbasis (60) kleiner als das Verhältnis der Genauigkeit der Lokalisierung zu der Lichtgeschwindigkeit ist.

8. Verfahren nach einem beliebigen der Ansprüche 1 bis 7, **dadurch gekennzeichnet, dass** die Abtastperiode ($\Delta t_{ech}$) kleiner oder gleich dem Minimum einer ersten minimalen Abtastdauer ($\Delta t_{Shannon}$) entsprechend einem Shannonkriterium und einer zweiten Dauer ($\Delta t_E$) entsprechend einer Zufriedenheit der Anforderung einer vorbestimmten radiometrischen Auflösung ($\Delta T_B$) ist,
wobei die erste Dauer ($\Delta t_{Shannon}$) gleich der Hälfte der Periode entsprechend einer Wellenlänge ($\lambda_0$) einer Messfrequenz ist,
die zweite Dauer ($\Delta t_B$) eine Funktion der vorbestimmten radiometrischen Auflösung ($\Delta T_B$), einer Antennentemperatur ($T_A$), einer Empfängertemperatur $T_{(rec)}$, einer Breite der Filterbandbreite (B), einer Gesamtzahl (N+1) von Elementarantennen, einer Länge (D) der Netzantenne (8), einer wirksamen Oberfläche (Se) einer Elementarantenne, der Pixelgröße ($T_{pixel}$), der Geschwindigkeit ($V_{sat}$) des mindestens einen Satelliten (4; 404; 504) ist.

9. Verfahren nach Anspruch 8, **dadurch gekennzeichnet, dass** die zweite Dauer ($\Delta t_B$) die Gleichung erfüllt:

$$\Delta t_B = \sqrt{2}\left(\frac{\Delta T_B}{T_A + T_{rec}}\right)\frac{S_e}{D^2}\frac{1}{\sqrt{B}}(N+1)\left(\frac{T_{pixel}}{V_{sat}}\right)^{\frac{3}{2}}$$

10. Bildgebendes radiometrisches System, das dazu dient, mindestens einen charakteristischen Parameter von auf einer Oberfläche angeordneten entfernten Objekten zu kartographieren, der über eine von den Objekten mehrwinklig emittierte elektromagnetische Strahlung detektierbar ist, **dadurch gekennzeichnet, dass** es umfasst:

eine Netzantenne (8, 432, 532), die aus Elementarantennen (A(k)) gebildet wird, die auf mindestens einem beweglich zur Oberfläche vorgesehenen Satelliten (4, 404, 406; 504, 506) angeordnet sind,

mindestens eine Empfangsanordnung, die mit der Netzantenne (8; 432; 532) verbunden ist, geeignet zum Versehen von aufeinanderfolgenden Positionen (P(t(i))) einer vorbestimmten Elementarantenne (A(1)) der Netzantenne (8; 432, 532) mit einer Zeitbasis (60) erhöhter Genauigkeit, die als raumzeitliche Referenz dient, wobei die aufeinanderfolgenden Positionen der Referenzelementarantenne (A(1)) gemäß einer Abtastperiode $\Delta T_{ech}$ bei aufeinanderfolgenden Zeitpunkten (t(i)), die nach einem Index (i) geordnet sind, ausgewählt werden und gemäß einem in Bezug auf die überflogene Oberfläche feststehendes Raumkoordinatensystem geortet werden, wobei jeder Elementarantenne (A(k)) für jede aufeinanderfolgende ausgewählte Position (P(t(i))) der Referenzelementarantenne (A(1)) eine lokale Uhr (H(k)) zugeordnet wird, wobei jede zugeordnete lokale Uhr (H(k)) mit der Zeitbasis synchronisiert wird,

für jede ausgewählte aufeinanderfolgende Position (P(t(i))) der Referenzelementarantennen [A(1)) Bestimmen der jeweiligen Raumpositionen der Elementarantennen (A(k)) in Bezug auf die Referenzelementarantenne (A (1)),

bei jedem Abtastzeitpunkt (t(i)), der mit einer ausgewählten Position (P(t(i))) der Elementarantenne (A(1)) korrespondiert, Messen in analytischer Weise eines elektromagnetischen Feldes, das von jeder Elementarantenne (A(k)) empfangen wird und Liefern für jede eine Phasenkomponente und einer Quadraturkomponente,

Bestimmen für jede analytische Messung des gemessenen elektromagnetischen Feldes (E(k,t(i))) den Index (k) der korrespondierenden Elementarantenne und den Zeitpunkt (t(i)) der korrespondierenden Abtastung,

und eine Verarbeitungseinheit (6), geeignet zum Definieren (220) einer zeitlichen Bilddomäne ($D_{IM}(i_m)$) für einen vorgegebenen Bildindex ($i_m$), die durch die Abtastzeitpunkte (t(j)) gebildet wird, derart, dass die Differenz $t(i_m)$-t (j) kleiner oder gleich einer vorbestimmten zeitlichen Dauer $\Delta t_{IM}$ der Bilddomäne ist,

für jedes Paar (k, j) des Index (k) der Elementarantenne (A(k)) und des Index (j) des Abtastzeitpunktes korrespondierend zu der zeitlichen Bilddomäne ($D_{IM}(i_m)$) Liefern (222) eines Messvektors M(k,j), der, zeitlich geordnet, die Proben der Messungen des elektromagnetischen Feldes, das von der Elementarantenne (A(k)) zu den Zeitpunkten der Abtastung zwischen dem Abtastzeitpunkt (t(j) und dem Abtastzeitpunkt

$$t\left(j - \frac{\Delta t_c}{\Delta t_{ech}}\right)$$ empfangen wird, enthält, wobei $\Delta t_c$ eine Dauer der Integration der Korrelation zwischen zwei Messvektoren M(k, j), M(k', j') bezeichnet,

Konstruieren (224) eines Bildes ($IM(I_m)$) aus einer raumzeitlichen Visibilitätsfunktion, die eine Menge von Visibilitätskoeffizienten umfasst,

wobei mindestens ein Visibilitätskoeffizient gleich der Korrelation von zwei Messvektoren M(k, j), M(k', j') ist, deren Abtastindizes j, j verschieden sind.

**11.** Bildgebendes radiometrisches System nach Anspruch 10, **dadurch gekennzeichnet, dass**
die Netzantenne (8; 432; 532) ein erstes Segment (20; 424) von ausgerichteten Elementarantennen umfasst, das von einem zweiten Segment (428) von Elementarantennen oder von einer einzigen isolierten Antenne (A(N+1)) durch eine Entfernung kleiner oder gleich der Hälfte einer Größe der Netzantenne (8; 432; 532) beabstandet ist,
jede Elementarantenne (A(k)) ein jeweiliges Zentrum (C(k)) aufweist, wobei die Zentren (C(k), C(k+1)) von zwei benachbarten Antennen eines selben Segments (20, 424, 428) um eine halbe Wellenlänge ($\lambda_0/2$) getrennt sind und dass
das erste Segment (424) und das zweite Segment (428), respektive das erste Segment (20) und die isolierte Antenne (A(N+1)), gemäß einer selben Richtung orientiert sind.

**12.** Bildgebendes radiometrisches System nach Anspruch 11, **dadurch gekennzeichnet, dass** es einen einzigen Satelliten (4) und eine einzige Netzantenne (8) mit einer eindimensionalen Längenausbreitung (D) umfasst,
dass die Netzantenne (8) ein einziges Segment (20) von ausgerichteten Elementarantennen, wobei das Segment (20) eine Länge (D1) entsprechend der Hälfte der Länge (D) der Netzantenne (8) aufweist, und eine isolierte Elementarantenne (A(N+1)) umfasst, die durch einen leeren Raum (30) von derselben Länge (D1) wie die des Segments (20) getrennt ist und auf die Elementarantennen des Segments (20) ausgerichtet ist.

**13.** System nach Anspruch 11, **dadurch gekennzeichnet, dass** die Elementarantennen (426; 436) der Netzantenne (432; 532) auf zwei Satelliten (404, 406; 504, 506) angeordnet sind, die jeweils eine heliosynchrone polare Umlaufbahn beschreiben und einen Formationsflug bilden, wobei das erste Segment (424) auf dem ersten Satelliten (404; 504) und das zweite Segment (428) auf dem zweiten Satelliten (406; 506) angeordnet sind.

**14.** System nach Anspruch 13, **dadurch gekennzeichnet, dass** die Höhen der polaren Umlaufbahnen sich um eine Höhe kleiner als das Doppelte der Länge eines Segments unterscheiden.

**15.** System nach Anspruch 13, **dadurch gekennzeichnet, dass** der erste Satellit (504) und der zweite Satellit (506) auf heliosynchronen polaren Umlaufbahnen derselben Höhe angeordnet sind, wobei die Satelliten (504, 506) in der Längsrichtung durch einen Abstand getrennt sind, der zwischen einer oder zwei Längen eines Segments liegt.

**Claims**

**1.** Process for radiometric imaging, intended to map at least one parameter that is characteristic of remote objects arranged on a surface and is detectable by virtue of the multi-angle electromagnetic radiation emitted by the objects, the process using an array antenna (8; 432; 532) formed of elementary antennas (A(k)) arranged on board at least one satellite (4; 404, 406; 504, 506) which is mobile with respect to the surface, the process being **characterised in that** it comprises the steps consisting in:

identifying (202) each elementary antenna (A(k)) by an index k,

time/date-stamping (206), by means of a time base (60), of the successive positions (P(t(i))) of a predetermined elementary antenna (A(1)) of the array antenna (8; 432, 532) serving as spatiotemporal reference, the successive positions of the reference elementary antenna (A(1)) being sampled in accordance with a sampling period ($\Delta t_{ech}$) at successive times (t(i)) ordered in accordance with an index (i), and being located in a fixed spatial frame of reference with respect to the surface being overflown,

each elementary antenna (A(k)) being associated with a local clock (H(k)), for each sampled successive position (P(t(i))) of the reference elementary antenna (A(1)), synchronising (208) each associated local clock (H(k)) to the time base (60),

for each sampled successive position (P(t(i))) of the reference elementary antenna (A(1)), determining (210) the respective spatial positions of the elementary antennas (A(k)) with respect to the reference elementary antenna (A(1)),

at each sampling time (t(i)) corresponding to a sampled position (P(t(i))) of elementary antenna (A(1)), measuring (212) analytically an electromagnetic field received by each elementary antenna (A(k)), and providing for each one an in-phase component and a quadrature component of the field,

assigning (214) to each analytical electromagnetic-field measurement (E(k,t(i))) measured the index (k) of the corresponding elementary antenna and the corresponding sampling date (t(i)),

for a predetermined image index ($i_m$), defining (220) a temporal-image domain ($D_{IM}(i_m)$) constituted by the sampling times (t(j)) such that the difference $t(i_m)$-t(j) is less than or equal to a predetermined image-domain temporal duration $\Delta t_{IM}$,

to each pair (k, j) constituted by index (k) of elementary antenna (A(k)) and by sampling-time index (j) corresponding to the temporal-image domain ($D_{IM}(i_m)$), providing (222) a measurement vector M(k, j) containing, temporally ordered, the samples of the measurements of the electromagnetic field received by elementary antenna (A(k)) at the sampling times between sampling time t(j) and sampling time

$$t\left(j - \frac{\Delta t_c}{\Delta t_{ech}}\right),$$ $\Delta t_c$ designating an integration-time of the correlation between two measurement vectors M(k, j), M(k',j'),

constructing (224) an image ($IM(i_m)$) from a spatiotemporal visibility function comprising a set of coefficients of visibility, at least one coefficient of visibility being equal to the correlation of two measurement vectors M(k,j), M(k',j'), the sampling indices j, j' of which are distinct.

**2.** Process for radiometric imaging according to Claim 1, **characterised in that** in the case where a pixel size ($T_{pixel}$) is predetermined and at least one satellite (4; 404; 504) carrying the reference elementary antenna (A(1)) has a speed of displacement with respect to the observed surface ($V_{sat}$) the correlation integration-time ($\Delta t_c$) is equal to the product of a fractional coefficient ($\alpha$) and the size ($T_{pixel}$) of a pixel divided by the speed ($V_{sat}$) of the at least one satellite (4; 404; 504).

**3.** Process for radiometric imaging according to Claim 2, **characterised in that** the fractional coefficient ($\alpha$) is less than or equal to 1/3 and preferably equal to 1/5.

**4.** Process for radiometric imaging according to any one of Claims 2 to 3, **characterised in that** the temporal image-domain duration ($\Delta t_{IM}$) is equal to the ratio of the largest of the distances (D) separating any pair of elementary antennas (A(k)) to the speed of displacement ($V_{sat}$) of the at least one satellite (4; 404; 504), and

**in that** a filtering passband (B) of the frequencies around a central frequency ($v_0$) of the electromagnetic field measured by each of the elementary antennas (A(k)) is less than or equal to the ratio of the speed of displacement ($V_{sat}$) of the at least one satellite (4; 404; 504) to the largest of the distances (D) separating any pair of elementary antennas (A(k)).

5. Process for radiometric imaging according to any one of Claims 1 to 4, **characterised in that** a frequency band for measuring the electromagnetic field received by the elementary antennas (A(k)) lies within the L-band and preferably within the band of frequencies between 1400 MHz and 1427 MHz.

6. Process according to any one of Claims 4 to 5, **characterised in that** the tracking precision of an elementary antenna (A(k)) is equal to the product of a fractional coefficient ($\beta$) and the wavelength ($\lambda_0$) corresponding to the central frequency ($v_0$), the fractional coefficient ($\beta$) being less than 1/5 and preferably less than 3/20.

7. Process according to Claim 6, **characterised in that** the precision of the time base (60) is less than the ratio of the tracking precision to the speed of light,

8. Process according to any one of Claims 1 to 7, **characterised in that** the sampling period ($\Delta t_{samp}$) is less than or equal to the minimum of a first minimal sampling duration ($\Delta t_{Shannon}$) corresponding to a Shannon criterion and of a second duration ($\Delta t_B$) corresponding to the satisfaction of the requirement of a predetermined radiometric resolution ($\Delta T_B$),
the first duration ($\Delta t_{Shannon}$) being equal to half of the period corresponding to a wavelength ($\lambda_0$) of a measurement frequency,
the second duration ($\Delta t_B$) being a function of the predetermined radiometric resolution ($\Delta T_B$), of an antenna temperature ($T_A$), of a receiver temperature ($T_{rec}$), of a filtering passband width (B), of a total number (N+1) of elementary antennas, of a length (D) of the array antenna (8), of an effective surface area (Se) of an elementary antenna, of the size of a pixel ($T_{pixel}$), of the speed ($V_{sat}$) of the at least one satellite (4; 404; 504).

9. Process according to Claim 8, **characterised in that** the second duration ($\Delta t_B$) satisfies the equation:

$$\Delta t_B = \sqrt{2}\left(\frac{\Delta T_B}{T_A + T_{rec}}\right)\frac{S_e}{D^2}\frac{1}{\sqrt{B}}(N+1)\left(\frac{T_{pixel}}{V_{sat}}\right)^{\frac{3}{2}}$$

10. Radiometric imaging system intended to map at least one parameter that is characteristic of remote objects arranged on a surface and is detectable by virtue of the multi-angle electromagnetic radiation emitted by the objects, **characterised in that** said system comprises
an array antenna (8, 432, 532) formed of elementary antennas (A(k)) arranged on board at least one satellite (4; 404, 406; 504, 506) which is mobile with respect to the surface,
at least one receiver assembly connected to the array antenna (8; 432; 532), capable of
time/date-stamping, by a time base (60) having high precision, of the successive positions (P(t(i)) of a predetermined elementary antenna (A(1)) of the array antenna (8, 432, 532) serving as spatiotemporal reference, the successive positions of the reference elementary antenna (A(1)) being sampled in accordance with a sampling period $\Delta T_{ech}$ at successive times (t(i)) ordered in accordance with an index (i), and being located in a fixed spatial frame of reference with respect to the surface being overflown,
each elementary antenna (A(k)) being associated with a local clock (H(k)), for each successive sampled position (P(t(i))) of the reference elementary antenna (A(1)), synchronising each associated local clock (H(k)) to the time base (60),
for each successive sampled position (P(t(i)) of the reference elementary antenna (A(1)), determining the respective spatial positions of the elementary antennas (A(k)) with respect to the reference elementary antenna (A(1)),
at each sampling time (t(i)) corresponding to a sampled position (P(t(i))) of elementary antenna (A(1)), measuring analytically an electromagnetic field received by each elementary antenna (A(k)), and providing for each one an in-phase component and a quadrature component,
assigning to each analytical electromagnetic-field measurement (E(k,t(i))) measured the index (k) of the corresponding elementary antenna and the corresponding sampling date (t(i)),

and a processing unit (6) which is capable of

defining (220), for a predetermined image index ($i_m$), a a temporal-image domain ($D_{IM}(i_m)$) constituted by the sampling times ($t(j)$) such that the difference $t(i_m)-t(j)$ is less than or equal to a predetermined image-domain temporal duration $\Delta t_{IM}$,

providing (222), to each pair (k, j) constituted by index (k) of elementary antenna (A(k)) and by sampling-time index (j) corresponding to the temporal-image domain ($D_{IM}(i_m)$), a measurement vector M(k, j) containing, temporally ordered, the samples of the measurements of the electromagnetic field received by elementary antenna (A(k)) at the sampling times between sampling time t(j) and sampling time $t(j - \dfrac{\Delta t_c}{\Delta t_{ech}})$, $\Delta t_c$ designating an integration-time of the correlation between two measurement vectors M(k,j), M(k',j'),

constructing (224) an image ($IM(i_m)$) from a spatiotemporal visibility function comprising a set of coefficients of visibility, at least one coefficient of visibility being equal to the correlation of two measurement vectors M(k,j), M(k', j'), the sampling indices j, j' of which are distinct.

11. Radiometric imaging system according to Claim 10, **characterised in that**
the array antenna (8; 432; 532) includes a first segment (20; 424) of aligned elementary antennas which is spaced from a second segment (428) of elementary antennas or from a single isolated antenna (A(N+1)) by a spacing distance less than or equal to half of a size of the array antenna (8; 432; 532),
**in that** each elementary antenna (A(k)) has a respective centre (C(k)), the centres (C(k), C(k+1)) of two adjacent antennas of the same segment (20, 424, 428) being separated by a half-wavelength ($\lambda_0/2$), and **in that**
the first segment (424) and second segment (428), respectively the first segment (20) and the isolated antenna (A(N+1)), are oriented in the same direction.

12. Radiometric imaging system according to Claim 11, **characterised in that** it includes a single satellite (4) and a single array antenna (8) of unidimensional length extension (D),
**in that** the array antenna (8) includes a single segment (20) of aligned elementary antennas, the segment (20) having a length (D1) half of the length (D) of the array antenna (8), and an isolated elementary antenna (A(N+1)) separated by an empty space (30) of the same length (D1) as that of the segment (20) and aligned with the elementary antennas of the segment (20).

13. System according to Claim 11, **characterised in that** the elementary antennas (426; 436) of the array antenna (432; 532) are arranged on two satellites (404, 406; 504, 506) each describing a heliosynchronous polar orbit and forming a flight in formation, the first segment (424) being arranged on the first satellite (404; 504), and the second segment (428) being arranged on the second satellite (406; 506).

14. System according to Claim 13, **characterised in that** the altitudes of the polar orbits differ by a height less than twice the length of a segment.

15. System according to Claim 13, **characterised in that** the first satellite (504) and the second satellite (506) are situated on heliosynchronous polar orbits of the same altitude, the satellites (504, 506) being separated in the longitudinal direction by a distance amounting to between one and two lengths of a segment.

FIG.1

## FIG.2

FIG.3

FIG.4

200

202

204

206

208

210

212

214

216

218

Oui    Non

220

220

222

224

# FIG.5

$$\underline{\text{FIG.6}}$$

402

Déplacement
du satellite

16,6 m

432

426

404

424     426

25 m

410

430     406

428     430

16,6 m

16,6 m

412

408

# FIG.7

Déplacement
du satellite

16,6 m

502

504

532

506

25 m

510

16,6 m

512

508

FIG.8